(19) Europäisches Patentamt

European Patent Office

Office européen des brevets

(11) **EP 1 327 535 A2**

(12) **EUROPEAN PATENT APPLICATION**

(43) Date of publication:
**16.07.2003 Bulletin 2003/29**

(51) Int Cl.⁷: **B60C 23/04**

(21) Application number: **03250172.8**

(22) Date of filing: **10.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **10.01.2002 US 44806**

(71) Applicant: **Algonquin Scientific, LLC**
**Troy, Michigan 48098-2683 (US)**

(72) Inventors:
• **Konchin, Boris**
  **Ontario, P1H 2K4 (CA)**
• **Greene, Darrell F.**
  **Ontario, P1H 1V8 (CA)**

• **Landers, Michael**
  **MI 48304 (US)**
• **Vucovic, Bato**
  **Ontario M8Z 1H4 (CA)**
• **Howse, Darrin**
  **Pickering, Ontario L1W 1V7 (CA)**
• **Dudarev, Vladimir**
  **Ontario POA 1MO (CA)**

(74) Representative: **Price, Nigel John King**
  **J.A. KEMP & CO.**
  **14 South Square**
  **Gray's Inn**
  **London WC1R 5JJ (GB)**

(54) **Tire pressure sensing system**

(57)      A monitoring system for monitoring a first parameter includes an active sensor (14), a receiver (20) and an indicator (80). The active sensor (14) is positioned at a first location and is operable to sense the first parameter. The receiver (20) is positioned at a second location remote from the first location and within proximity to the sensor. The receiver is operable to generate a signal indicative of the first parameter and includes an inductor, and an amplifier having a feedback path. The inductor is positioned relative to the receiver to create an electromagnetically coupling between the inductors such that feedback from the coupling is one of either a substantially zero feedback and a negative feedback. The indicator is in communication with the receiver to provide the first parameter to the user. This parameter may include a tire pressure of a tire on a vehicle. The monitoring system further includes a node in communication with the receiver and in communication with the indicator to provide electrical communication between the indicator and the receiver.

FIG. 1.

EP 1 327 535 A2

**Description**

CROSS REFERENCE TO RELATED APPLICATIONS

This application is a continuation-in-part application of U.S. Serial No. 09/430,595, entitled "TIRE PRESSURE SENSING SYSTEM", filed October 29, 1999, now pending, which is a continuation-in-part of U.S. Serial No. 09/079,375, entitled "TIRE PRESSURE SENSING SYSTEM", filed May 15, 1998, now U.S. Patent No. 6,124,787, which is a continuation-in-part application of U.S. Serial No. 08/782,430, entitled "TIRE PRESSURE SENSING SYSTEM", filed January 15, 1997, now U.S. Patent No. 5,790,016.

FIELD OF THE INVENTION

The present invention relates generally to condition monitoring systems and, more particularly, to a system that monitors air pressure in the tires of a motor vehicle, and that generates a signal indicative of the tire pressure in each of the tires to improve tire life, minimize tire wear, and increase vehicle performance and safety.

BACKGROUND OF THE INVENTION

Correct tire pressure is a critical factor in the safe operation and performance of a motor vehicle. Over inflated tires often result in unnecessary tire wear and less than optimal vehicle performance. Under inflated tires typically result in increased tire wear, decreased vehicle performance, and compromise the ability of the tires to maintain a safe interface with the road.

Conventionally, tire air pressure has been checked with mechanical gauges designed to be inserted over tire inner tube valve stems. Such gauges provide a generally accurate air pressure reading. However, the gauges are incapable of providing continuous monitoring of the air pressure within the tires and are limited in accuracy, and also require a driver concerned about tire air pressure to physically stop and exit the vehicle to check the tire pressure. In addition, such mechanical gauges do not provide any warning indication when the tire pressure reaches a level considered to be dangerous or unsuitable (such as below 14 psi in a typical passenger motor vehicle) for normal driving conditions.

Other systems utilize an active inductor capacitor (LC) circuit affixed within the tire to monitor tire air pressure. However, the active LC circuit requires a power source for operation. Because it is mounted within the tire, the power source, as well as the additional circuit components, are subjected to rotational vibration and other extreme conditions caused by temperature fluctuation. The circuit components are also difficult to install and replace if damaged or depleted due to their location within the tire. In addition, such systems typically provide no warning to the driver when the tire pressure falls below or rises above a certain minimum/maximum acceptable level. Moreover, these active inductor capacitor (LC) type systems generally also utilize battery power when the vehicle is both in operation and also in a parked non-use condition, thereby reducing the overall battery life of the active inductor capacitor (LC) circuit.

Other systems may utilize a sensor system that require the location of the sensor relative to a receiver pickup to be in very close proximity to one another. This provides a great disadvantage in enabling various options for mounting locations of the receiver relative to the sensor which may invariably lead to mounting the receiver in a very harsh environment location. Additionally, such systems may also require very large size inductors (L) which is also very difficult and, in some instances, not practical for mounting within vehicle tires. These types of systems may also increase the overall undamped weight of the overall tire by requiring such a large inductor (L). Other systems also require hard wiring of pickup receivers to indicator devices in the vehicle. This type of hard wiring must be, thereby routed throughout the vehicle wiring system either during production of the vehicle or for after-market use. This makes it very difficult to install such a system for aftermarket use since generally this wiring must be mounted throughout the vehicle. Other systems further do not provide diagnostics to identify whether or not the system is, in fact, working properly.

What is needed then is a tire pressure sensing system which does not suffer from the above-mentioned disadvantages. This, in turn, will provide a sensing system which monitors tire air pressure using a passive sensor, provides improved mounting of the sensor within the tire, provides a system which is less susceptible to interference, provides a sensor system which can accurately monitor the change in tire air pressure, provides improved sensors which operate to identify if the tire air pressure is outside a predetermined range or identifies the actual tire air pressure based upon variable capacitance or inductive changes, provides a sensor system which enables more versatility in the placement of a pickup receiver, provides a sensor system which conserves sensor battery power when the vehicle is not in use, provides a sensor system which can easily be installed for aftermarket use without requiring hard wiring between a receiver pickup and an indicator device, and provides system diagnostics to confirm proper operation of the overall tire monitoring system. It is, therefore, an object of the present invention to provide such a tire pressure sensing system.

SUMMARY OF THE INVENTION

The present invention provides a tire pressure monitoring system that utilizes either a passive LC circuit or an active LC circuit mounted within the tire for monitoring tire air pressure. The passive, circuit requires no power source and therefore is both less expensive to operate and has a longer useful life than conventional tire pressure monitoring systems utilizing active tire pressure sensors. The active circuit conserves battery power by stabling the circuit when the vehicle is not in use. The tire pressure monitoring system of the present invention is configured to provide either an audible or visual indication to the driver when tire pressure in any of the vehicle tires falls below a minimum acceptable level. The tire pressure monitoring system of the present invention may also be configured to provide a continuous digital readout of the actual tire pressure sensed within each of the vehicle tires to the vehicle driver based upon either a variable capacitance sensor or a variable inductance sensor. The tire pressure monitoring system may further be configured to eliminate hard wiring between the pickup receivers and an indicator device.

In one preferred embodiment, a tire pressure monitoring system for monitoring a pressure of at least one tire on a vehicle includes a sensor, a receiver and a tire pressure status indicator. The sensor is mounted relative to the at least one tire of the vehicle and is operable to sense tire pressure within the at least one tire. The receiver is mounted relative to the vehicle at a location external of the tire and within proximity to the sensor. The receiver is operable to generate a signal indicative of the tire pressure sensed by the sensor. The receiver includes a first inductor, a second inductor and an amplifier having a feedback path such that the first inductor and the second inductor are positioned relative to one another to create an electromagnetic coupling between the inductors such that feedback from this coupling is one of either a substantially zero feedback and a negative feedback. The tire pressure status indicator is in communication with the receiver to provide a tire pressure status based on the signal generated by the receiver.

In another preferred embodiment, a monitoring system for monitoring a first parameter includes a sensor, a receiver and an indicator. The sensor is positioned at a first location and is operable to sense a first parameter. The receiver is positioned at a second location remote from the first location and within proximity to the sensor. The receiver is operable to generate a signal indicative of the first parameter. The receiver includes a first inductor, a second inductor and an amplifier having a feedback path. The first inductor and the second inductor are positioned relative to one another to create an electromagnetic coupling between the inductors such that feedback from this coupling is one of either a substantially zero feedback and a negative feedback. The indicator is in communication with the receiver to provide the first parameter to a user.

In another preferred embodiment, a tire pressure monitoring system for monitoring the pressure in at least one tire mounted on a rim of the vehicle includes a sensor, a receiver and a tire pressure status indicator. The sensor is housed within a first housing and a second housing with each housing being mounted to a rim of the vehicle and being in electrical communication with one another. The receiver is mounted relative to the vehicle at a location external of the tire and within proximity to the sensor. The receiver is operable to be electromagnetically coupled to the sensor to generate a signal indicative of the pressure sensed by the sensor. The tire pressure status indicator is in communication with the receiver and is operable to display the tire pressure status based on the signal generated by the receiver.

In yet another preferred embodiment, a monitoring system for monitoring a first parameter includes a sensor and a receiver. The sensor is positioned at a first location and includes an inductor having an inductance L which is positioned relative to a ferrite core. The ferrite core is operable to vary the inductance L of the inductor and the sensor is operable to sense the first parameter. The receiver is positioned at a second location remote from the first location and within proximity to the sensor. The receiver is operable to be electromagnetically coupled to the sensor to generate a signal indicative of the first parameter sensed by the sensor.

In yet another preferred embodiment, a monitoring system for monitoring a first parameter includes a sensor and receiver. The sensor is positioned at a first location and is operable to sense the first parameter. The receiver is positioned at a second location remote from the first location and within proximity to the sensor. The receiver includes an amplifier with a feedback path. The amplifier is in a waiting non-oscillating mode when the sensor is not electromagnetically coupled to the receiver and in an active oscillating mode when the sensor is electromagnetically coupled to the receiver.

In another preferred embodiment, a sensor for monitoring a first parameter includes a capacitor, an inductor and a ferrite core. The inductor has an inductance L and the ferrite core is positioned relative to the inductor. Upon movement of the ferrite core relative to the inductor, the inductance L of the inductor is varied in response to the changes in the first parameter.

In another preferred embodiment, a receiver for monitoring a first parameter with a sensor includes an amplifier, a first inductor and a second inductor. The amplifier includes a feedback path and the first inductor and the second inductor are in electrical communication with the amplifier. The amplifier is in a waiting non-oscillating mode when the sensor is not electromagnetically coupled to the receiver and in an active oscillating mode when the sensor is electromagnetically coupled to the receiver.

In another preferred embodiment, a tire pressure monitoring system for monitoring a pressure of at least one tire on a vehicle includes an actively powered sensor, a receiver and a tire pressure status indicator. The actively powered sensor is mounted relative to the tire of the vehicle and is operable to sense tire pressure within the tire. A receiver is mounted relative to the vehicle at a location external of the tire and within proximity to the sensor. The receiver is operable to generate a signal indicative of the tire pressure sensed by the actively powered sensor. The receiver includes a first inductor, a second inductor and an amplifier having a feedback path where the first inductor and the second inductor are positioned relative to one another so that upon creating an electromagnetic coupling between the first and second inductors, feedback from the coupling in the feedback bath is one of either a substantially zero feedback and a negative feedback. Tire pressure status indicator is in communication with the receiver to provide a tire pressure status based upon the signal generated by the receiver.

In another preferred embodiment, a tire pressure monitoring system for monitoring a pressure of a tire on a vehicle includes a sensor, a receiver, a coupling transducer and a tire pressure status indicator. The sensor is mounted relative to the tire on the vehicle and is operable to sense the tire pressure within the tire. The receiver is mounted relative to the vehicle at a location external of the tire and within proximity to the sensor. The receiver is operable to generate a signal indicative of the tire pressure sensed by the sensor. The coupling transducer is in communication with the receiver and is operable to couple a signal to a vehicle power grid upon receipt of the signal generated by the receiver. The tire pressure status indicator is in communication with the coupling transducer and includes an acoustic transducer operable to receive the signal applied to the vehicle power grid by the coupling transducer.

In yet another preferred embodiment, a monitoring system for monitoring a first parameter within a vehicle includes an active sensor, a receiver, a coupling transducer and an indicator. The active sensor is positioned at a first location and is operable to sense the first parameter. The receiver is positioned at a second location remote from the first location and within proximity to the sensor. The receiver is operable to generate a signal indicative of the first parameter. The coupling transducer is in communication with the receiver and is operable to induce a signal on a vehicle power grid of the vehicle upon receipt of the signal from the receiver. The indicator is in communication with the coupling transducer by way of the vehicle power grid through an acoustic transducer to provide the first parameter to a user.

Use of the present invention provides a tire pressure monitoring system for monitoring air pressure within a tire. The present invention further provides a system for monitoring a first perimeter with a sensor located at a first location and a receiver located at a second location. As a result, the aforementioned disadvantages associated with the currently available methods and techniques for monitoring tire air pressure, as well as various other perimeters have been substantially reduced or eliminated.


BRIEF DESCRIPTION OF THE DRAWINGS

Still other advantages of the present invention will become apparent to those skilled in the art after reading the following specification and by reference to the drawings in which:

Figure 1 is a top plan view of a motor vehicle drive train including a tire pressure monitoring system of the present invention;

Figure 2 is an electrical schematic diagram of a first preferred embodiment of a tire pressure sensor in the system shown in Figure 1;

Figure 3A is a front elevational view in partial cross-section of a first sylfone embodiment shown in Figure 2;

Figure 3B is a cross-sectional view of a second alternative sylfone embodiment shown in Figure 2;

Figure 4 is a simplified electrical schematic diagram of a first preferred embodiment of a receiver of the system shown in Figure 1;

Figure 5 is an electrical schematic diagram illustrating the electromagnetic flux generated by the two conductor coils shown in Figure 4;

Figure 6 is a schematic diagram illustrating the positioning of the two inductor coils shown in Figure 4;

Figure 7 is a simplified electrical schematic diagram illustrating the effect of the sensor of Figure 2 on the receiver of Figure 4 when the sensor is rotated into operative proximity with the receiver;

Figure 8 is a detailed electrical schematic diagram of the receiver of Figure 4 and the sensor of Figure 2 of the present invention illustrating the receiver in additional detail;

Figures 9A and 9B are graphs illustrating the voltage output from the operational amplifier and the detector shown in Figure 8 versus time;

Figure 10 is an electrical schematic diagram of the LED interface of the system shown in Figure 1;

Figures 11A and 11B illustrate alternate embodiments of a sensor including a pressure sensitive capacitor of a tire pressure monitoring system according to a second preferred embodiment of the present invention;

Figure 12A is an electrical schematic diagram of the receiver of the system according to a second preferred embodiment of the present invention;

Figure 12B graphically illustrates the voltage output of the receiver of Figure 12A;

Figure 13 graphically illustrates a period T of oscillation at the output of the receiver shown in Figure 12A versus internal tire pressure under the constant value of the inductance of the receiver;

Figure 14 is an electrical schematic diagram illustrating the measurement and display features of the system according to the second preferred embodiment of the present invention;

Figure 15 illustrates a functional electrical schematic diagram of the converter block shown in Figure 14;

Figure 16 is a histogram of voltages measured at different points in the circuit of Figure 15;

Figure 17 is a graph illustrating recorded values of pressure within the tire stored in the memory of the processor utilized with the second embodiment of the present invention;

Figure 18 is a perspective view of the sensor shown in Figure 2 mounted to a rim according to a first mounting technique;

Figure 19 is a perspective view of the sensor shown in Figure 2 mounted to a rim according to a second mounting technique;

Figure 20 is a cross-sectional view of the sensor shown in Figure 2 mounted to a rim according to a third mounting technique;

Figure 21 is a cross-sectional view of a portion of the sensor shown in Figure 2 which is mounted to a rim, as shown in Figures 18-20;

Figure 22 illustrates a tire pressure monitoring system according to a third preferred embodiment of the present invention;

Figure 23 is a simplified electric schematic diagram illustrating the effect of the sensor of Figure 22 on the receiver of Figure 22 when the sensor is rotated into operative proximity with the receiver;

Figure 24 is a schematic diagram illustrating a second positioning of the two inductor coils shown in Figure 23;

Figures 25A and 25B are electrical schematic diagrams illustrating one loop of inductor L1 and one loop of inductor L2 shown in Figure 23 with the inductor currents shown in the same and opposite directions;

Figure 26 illustrates the logic sequence from the interaction between the sensor and receiver shown in Figure 23;

Figures 27A and 27B illustrate a first preferred sensor embodiment of the sensor shown in Figure 23;

Figures 28A and 28B illustrate a second preferred sensor embodiment of the sensor shown in Figure 23;

Figure 29 is an electrical schematic diagram illustrating the receiver shown in Figure 22 along with measurement and display circuitry according to the teachings of the third preferred embodiment of the present invention;

Figure 30 is a histogram of voltages measured at different points in the circuit of Figure 29;

Figure 31 is a schematic diagram illustrating an active sensor according to the teachings of a fourth preferred embodiment of the present invention;

Figures 32A and 32B illustrate a motion switch employed by the active sensor of Figure 31;

Figures 33A and 33B illustrate a pressure switch employed by the active sensor of Figure 31;

Figures 34A and 34B illustrate a sensor bobbin assembly employed by the active sensor of Figure 31;

Figure 35 illustrates the signal outputs from the active sensor of Figure 31;

Figure 36 is a schematic diagram illustrating a receiver according to the teachings of the fourth preferred embodiment of the present invention;

Figures 37A and 37B illustrate an inductor bobbin assembly of the receiver of Figure 36;

Figure 38 illustrates the logic sequence and signal outputs from the receiver of Figure 36;

Figure 39 is a schematic diagram illustrating an indicator according to the teachings of the fourth preferred embodiment of the present invention;

Figure 40 is a schematic block diagram illustrating an ultrasonic sensing system according to the teachings of a fifth preferred embodiment of the present invention;

Figure 41 is a schematic diagram illustrating a transducer employed in the sensor system of Figure 40;

Figures 42a and 42b represent a warning indicator circuit according to the teachings of a fifth embodiment of the present invention;

Figure 43 is a top plan view of a multi-axle motor vehicle including a tire pressure monitoring system of the present invention;

Figure 44 is a schematic representation of another embodiment of a tire pressure sensor according to the system shown in Figure 43;

Figure 45 is a schematic representation of another embodiment of a receiver according to the system shown in Figure 43;

Figure 46 is a flow chart representing the function of the sensor depicted in Figure 44;

Figure 47 is a flow chart representing the function of the receiver depicted in Figure 45;

Figure 48 is a schematic representation of a single node as depicted in the system shown in Figure 44;

Figures 49 and 50 are flow charts depicting the function of the node as depicted in Figure 48;

Figure 51 represents two signals as produced by the sensor of Figure 45;

Figure 52 represents voltage versus time plots for various portions of the system according to Figure 43;

Figures 52a and 52b represent voltage versus time plots for various portions of the system according to Figure 43; and

Figure 53 represents a cutaway view of an improved sensor construction according to another preferred embodiment of the present invention.

DETAILED DESCRIPTION OF THE PREFERRED EMBODIMENTS

The following description of the preferred embodiments concerning a tire pressure monitoring system are merely exemplary in nature and are not intended to limit the invention or its application or uses. Moreover, while the present invention is described in detail below with reference to monitoring tire air pressure within a tire, it will be appreciated by those skilled in the art that the present invention may be used to monitor any type of perimeter with a sensor positioned at a first location and a receiver positioned at a second location and is, therefore, clearly not limited to only monitoring tire air pressure. For an example, the preferred embodiments of the present invention may be utilized to monitor pressure, temperature, movement, stresses, strains, etc. and may be mounted or inserted into various objects including tires, key chains, human bodies, etc.

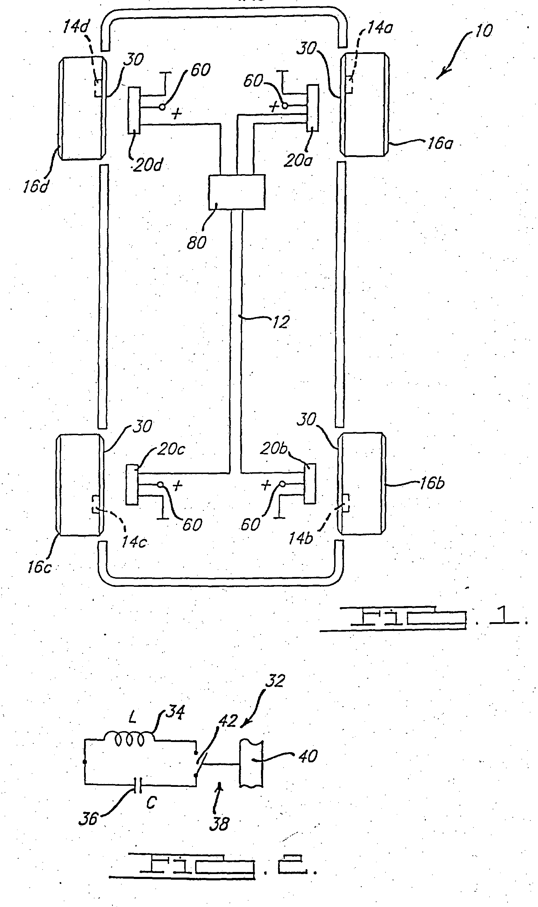

Referring to Figure 1, a tire pressure monitoring system (TPMS) is shown generally at 10, as installed in the drive train 12 of a motor vehicle. The TPMS 10 consists of four sensor transducers 14a-d, each mounted to the inside or outside of a corresponding tire 16a-d, and four receivers 20a-d each mounted via brackets (not shown) to the drive train 12 at a distance of several centimeters away from the inner edge of the corresponding tire. The TPMS 10 continuously monitors air pressure within each of the tires 16a-d during motion of the motor vehicle through generation of an electromagnetic coupling between corresponding pairs of sensor transducers 14a-d and receivers 20a-d during an alignment that occurs between the transducers 14a-d and receivers 20a-d during each rotation of the tires 16a-d. As will be described in detail below, this coupling may function to indicate only when tire pressure has fallen below predetermined minimum value, or to continuously inform the driver of the exact pressure within each tire. In this regard, the TPMS 10 illustrates the general overall system configuration for the five (5) embodiments discussed herein.

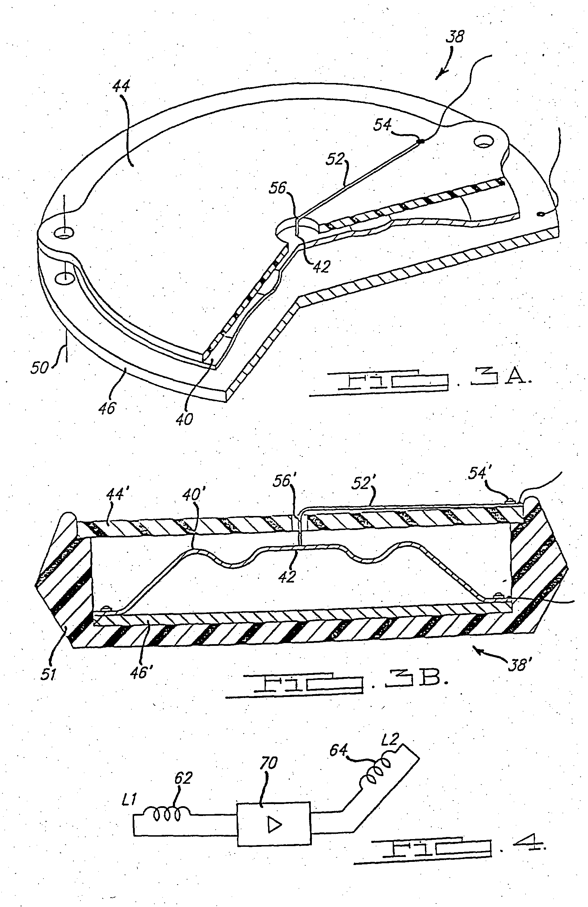

Referring to Figures 1 and 2, the structure of each sensor transducer 14a will now be described according to a first preferred embodiment of the present invention, with it being understood that the sensor transducers 14b-d are identical in structure and function. The sensor transducer 14a is preferably mounted to an inner edge 30 of the tire 16a or on the rim of the tire 16a, further described herein, and consists of a circuit 32 including an inductor 34, a capacitor 36, and a switching element 38 including a self-contained diaphragm, or sylfone 40 for controlling the opening and closing of a switch 42. The circuit 32 is passive in that it does not require a power source for operation. Rather, the inductor 34 and the capacitor 36 comprise a resonant LC contour that is rendered either conductive or non-conductive depending upon the actual pressure inside of the corresponding tire. As described below, the pressure sensor sylfone 40 selectively controls the conductivity of the circuit 32 corresponding to the tire pressure.

Referring to Figure 2, the inductor 34 preferably consists of several turns of a wire which, for example, may be about .05 millimeters in diameter and helically wound in a configuration having a diameter of, for example, 50 to 60 millimeters. The inductor 34, along with the switching element 38, may be secured to the interior of the inner tire edge 30 (Figure 1) through local vulcanization with liquid rubber to permanently secure the inductor to the tire. The capacitor 36 has a value corresponding directly to the pressure within the tire required to close the switching element 38 and cause the circuit to be conductive, and is secured to a cover 44 (Figures 3A, 3B) of the switching element 38. Leads from the inductor 34 and the capacitor 36 are soldered together to a base 46 of the switching element 38. The circuit 32 may also be configured to be secured to the rim of the tire 16a, further described herein.

Referring now to Figure 3A, the structure of a first switching element 38 is shown in detail. The sylfone 40 is integrally covered and hermetically sealed between the cover 44 and the base 46. Preferably, the sylfone 40 consists of a thin metal membrane that is welded to the base 46 and includes and defines an internal space within the membrane that is hermetically isolated from the external air. Several spacers 50 are secured to the base 46. The cover 44 is mounted onto the spacers 50 on top of the sylfone 40.

Referring in particular to the cover 44, an electrically conductive spring 52 is secured within the cover 44 at a first end 54 and selectively creates an electrical contact with the surface of the sylfone membrane 40 through a non-secured second end 56. The spring 52 is preferably composed of steel wire of approximately 0.2 millimeters in diameter and closes the switching element 38 when the internal tire pressure reaches a predetermined value. In one embodiment of the present invention, under normal atmospheric pressure, the spring 52 completes a circuit within the switching element 38. Completion of the circuit within the switching element completes the circuit 32 and activates the circuit 32. Thus, when mounted inside one of the tires 16a-d, the status of the switching element 38 is dependent on the internal tire pressure. If the internal tire pressure is at or near normal operating pressure, such as 30 pounds per square inch (psi), the sylfone membrane 40 is compressed, causing the contact assembly 42 to remain open. However, when the internal tire pressure is reduced to a value such as, for example, less than 15 psi, the sylfone membrane 40 is decompressed, causing the spring non-secured end 56 to contact the sylfone membrane 40 and close the circuit within the contact assembly, thereby causing the contact assembly to complete the circuit 32.

Referring to Figure 3B, a second alternative switching element is shown at 38'. The switching element 38' includes many of the same components contained in the switching element 38, and further includes a non-conductive housing 51 separating the cover 44' and the base 46'. Otherwise, its structure and function is similar to the switching element 38. Thus, it should be appreciated that the switching element may be constructed in a variety of configurations without departing from the scope of the present invention.

The circuit 32 may be is constructed from a thin metal foil that forms an open ring. The foil represents a contour with distributed characteristics, including the inductor 34 and the capacitor 36. Each end of the ring is soldered directly to the switching element 38. This particular circuit design thereby minimizes production costs without sacrificing system performance characteristics.

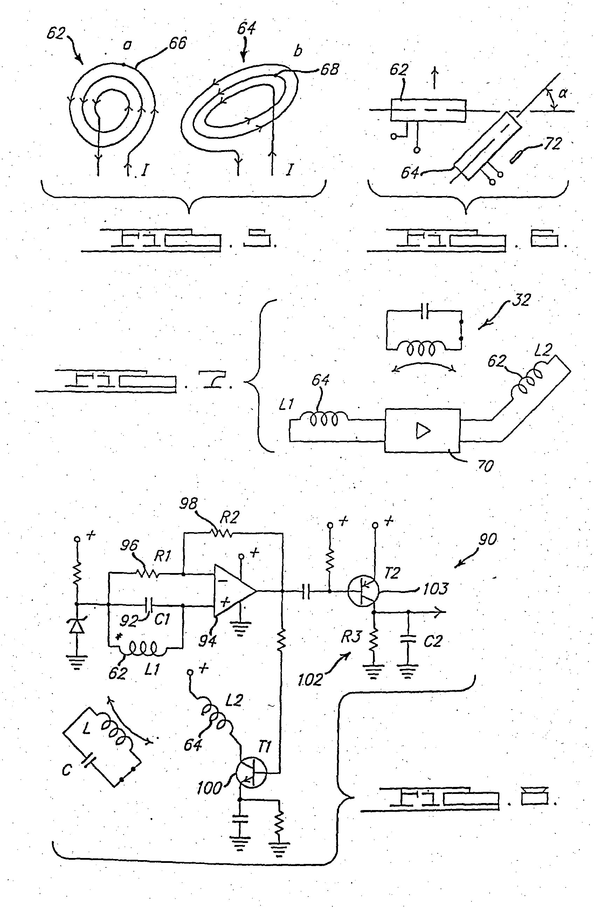

Still referring to Figures 2, 4 and 5, the structure of the receiver 20a will now be described in detail, with it being understood that the structure and function of the receivers 20b-d are identical. The receiver 20a is powered by a motor vehicle battery 60 when the engine of the motor vehicle is running. The receiver 20a includes inductors 62, 64 (Figure 4) which are preferably coils, each having a plurality of turns 66, 68 (Figure 5), and an amplifier 70 (Figure 4) which together form an oscillator having parameters that depend upon the mutual orientation of the inductors 62, 64. Referring to Figure 5, upon being energized by the motor vehicle battery 60, each element 66 of the inductor 62 interacts with an opposing flux generated by current in the inductor 64. Also, each element 68 of the inductor 64 interacts with an opposing flux generated by current flow in the inductor 62. By being connected to the constant gain amplifier 70. (Figure 4), the inductors 62, 64 through mutual interaction between coils can be adjusted to exhibit positive, negative or zero feedback characteristics.

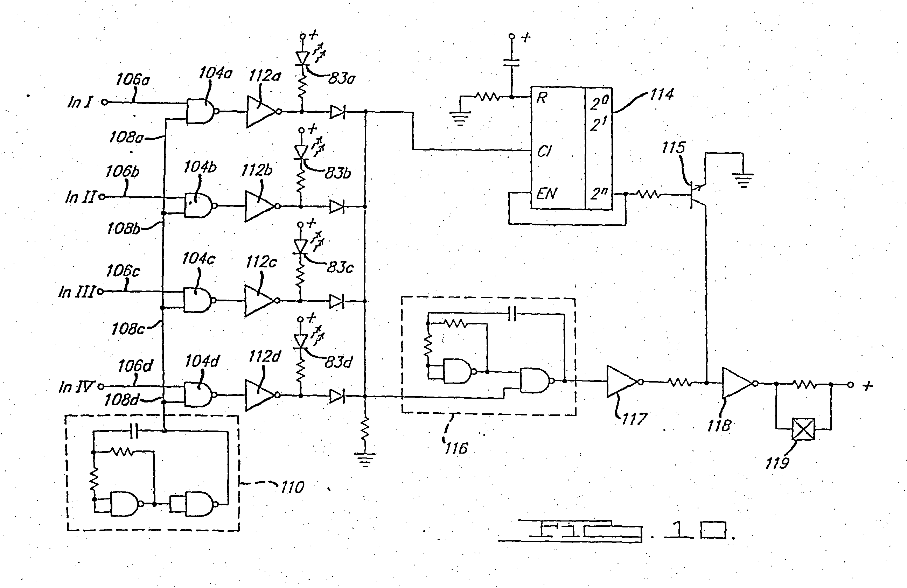

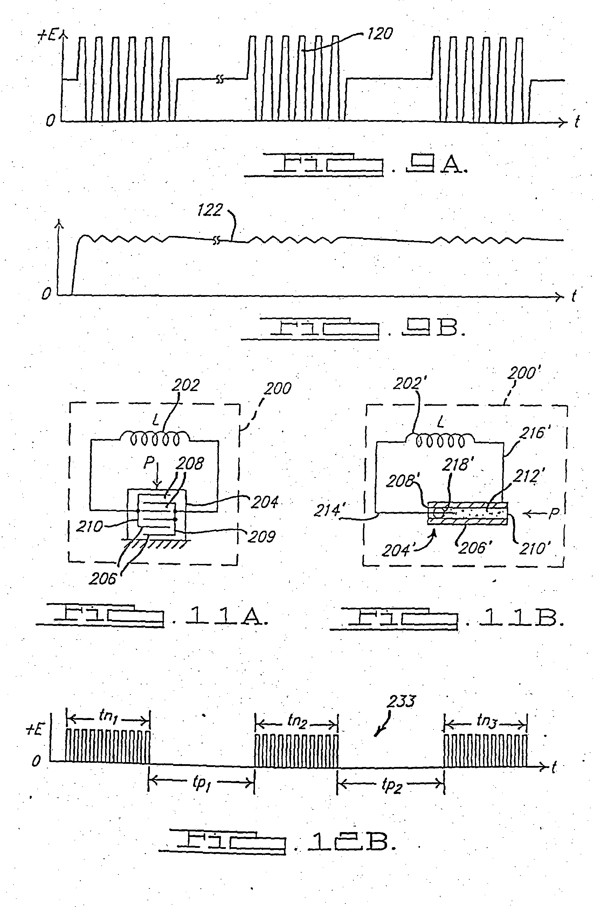

Referring to Figure 6, because the overall net effect of the feedback, whether it is positive, negative or zero, depends upon the mutual orientation and configuration of the inductors 62, 64, the type of feedback desired is adjusted by changing the angle of orientation between the coils during mounting of the coils to the motor vehicle drive train. The inductors 62, 64 are secured to the drive train at an angle $\alpha$ as shown in Figure 6 in conjunction with a tuning mechanism 72 placed between the inductors and the transducer. The tuning mechanism 72, which is preferably a small piece of foil, allows fine tuning of the inductors 62, 64, by securing the foil toward the inductor 64 or away from it prior to the inductors 62, 64 being permanently secured in place. The inductors 62, 64 are permanently secured in a specific position after alignment and tuning of the inductors 62, 64. Preferably, the circuit feedback is adjusted to equal zero or to be slightly negative so that there is no self-oscillation of the circuitry, thereby placing the amplifier 70 in a relaxation stage. The feedback characteristics of the circuit are subsequently changed upon the rotation of the sensor transducer 14a into operative proximity to the receiver 20a, as shown in Figure 7, and as will be described in detail below.

Referring again to Figure 1, each receiver 20a - 20d is connected to an LED indicator interface 80 through wiring, or, alternatively, through a wireless communication link. The indicator interface 80 is preferably located within the passenger compartment of the motor vehicle and displays the current status of each of the vehicle tires 16a-d to the motor vehicle operator. Preferably, the LED indicator 80 includes four light emitting diodes (LEDs) 83a-d (see Figure 10), with each LED 83a-d being associated with a particular tire 16a-d. More LEDs may be utilized for vehicles having more than four wheels. The indicator interface 80 may be mounted inside the front dashboard of the motor vehicle, or on the dashboard, for easy observation. Preferably, each LED 83a-d is only illuminated upon the internal pressure of a particular tire 16a-d either rising above a maximum acceptable tire pressure or falling below a minimum acceptable tire pressure.

Referring to the receiver, an electrical schematic diagram of each receiver is shown generally at 90 in Figure 8. Inductor 62 and an input capacitor 92 form an input contour calibrated for greater sensitivity to the resonant frequency of the sensor transducer 14a-d located in each tire. An operational amplifier 94 is utilized for signal amplification, and has a gain calibrated by resistors 96, 98. Additional current amplification is performed by the transistor 100 for additional amplification that is required to obtain total gain of the receiver 90. In particular, an output signal taken from the collector of transistor T2 of the receiver 90 can be adjusted to have zero output when mutual displacement of coils L1 and L2 is said to have zero feedback. By displacing these coils L1 and L2 in either direction from each other, either negative or positive feedback can be achieved. In case of positive feedback, an output from the receiver 90 will be present. In case of negative feedback, the output is still equal to zero. In general, the output from the operational amplifier 94 is greater than "1" when the following condition is met:

$$K\beta > 1, \text{ where } K = K1 \times K2$$

K1 = gain of operational amplifier 94
K2 = the gain of transistor 100 (Fig. 8)
$\beta$ = mutual coefficient of inductors 62, 64

The variable β depends on displacement of the inductors 62, 64, number of turns and their shape (size).

For final adjustment when K is constant, β is adjusted in such a way that Kβ ≤ 1 by adjusting the mutual displacement of the inductors L1 and L2.

Also, a cascade amplifier 102 formed by a transistor 103 operates as a pulse detector for the operational amplifier 94. Other components shown are required for DC calibration of the circuit.

Referring to Figure 10, an electrical schematic diagram of a preferred LED interface 80 is shown. The interface 80 preferably consists of four NAND logic gates 104a-d which are driven by first inputs 106a-d each connected to the output of a receiver 90 corresponding to a particular tire 16a-d. Second inputs 108a-d are connected to a free running oscillator 110. The oscillator 110 outputs a rectangular shaped voltage having a frequency of, for example, 0.33 to 0.50 hertz. Thus, when internal pressure in each of the tires 16a-d is near the normal operating pressure, all inputs to the NAND logic gates 104a-d will be a logical "0", As a result, all outputs of buffer inverters 112a-d, each of which is connected to an output of one of the NAND gates 104a-d, will also have a logical "0" as an output. Under these conditions, all LEDs 83a-d in the display will be illuminated. The LED interface 80 also preferably includes an audible warning component having a counter 114 and associated transistor 115, a second oscillator 116 that functions as a pulse generator, and two inverters 117, 118 that couple the oscillator 116 to an audible warning device, such as the buzzer 119.

Operation of the TPMS 10 according to the first preferred embodiment of the present invention will now be described. The theory of operation of the TPMS 10 of the present invention is based on the principle of mutual interference that is created between the two electromagnetic fields formed by the inductors 62, 64 in the receiver 90, and the electromagnetic field formed by the circuit 32 in the sensor transducer 14a-d mounted within or on the outside of each of the tires 16a-d. Thus, when the circuit 32 is closed and activated in response to sensed tire pressure, and the circuit 32 is rotated into operative proximity to the inductors 62, 64 of the receiver 90, the receiver 90 oscillates at a frequency dependent on the self-resonant frequency to which the circuit 32 is adjusted. The sign of the feedback between the inductors 62, 64 is subsequently changed from negative to positive. It should be appreciated that the shape and the amplitude of the oscillation depends upon the degree of feedback, the configuration of the inductor coils, and the gain of the amplifier 70 (Figure 4).

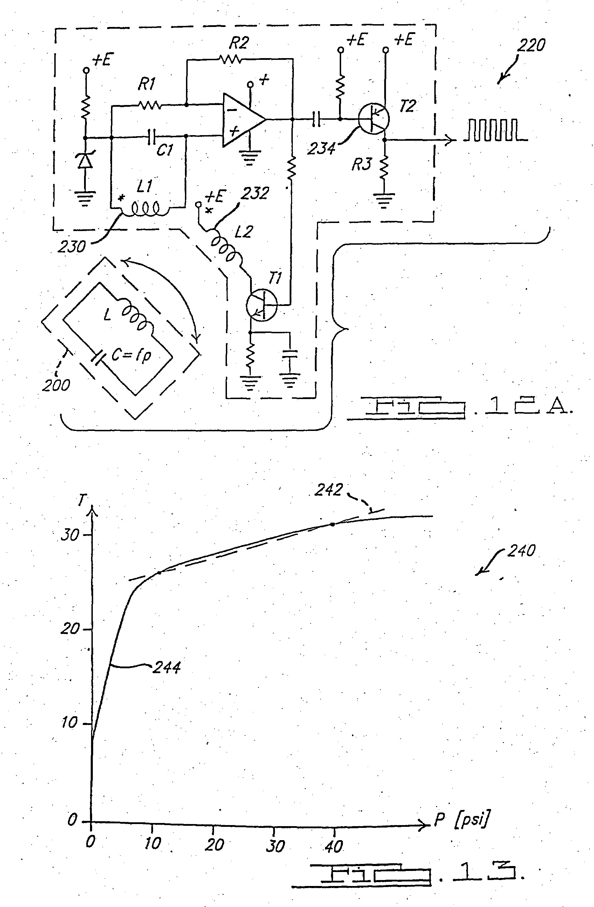

When the circuit 32 rotates into operative proximity to the receiver 90 as the tire rotates and the circuit 32 is open loop, or non-conductive, oscillation does not occur as the passive circuit 32 is not activated. When the circuit 32 is conductive, or the circuit loop closed, the operational amplifier 70 produces an oscillating output voltage when all inductors 34, 62, and 64 are aligned. This oscillating voltage has a frequency equal to the self resonant frequency of the circuit 32. The operational amplifier voltage is graphically illustrated at 120 in Figure 9A, while the receiver output voltage is graphically illustrated at 122 in Figure 9B.

Referring again to Figure 10, operation of the TPMS 10 will be described by way of example. When the internal pressure of a tire, such as the tire 16a, drops below a minimum acceptable level, and the switching element 38 closes, a logical "1" is output from the receiver 90 and input through the NAND gate input 106a. The logical "1" input causes the LED 83a to blink at a rate equal to the frequency of the oscillator 110.

The second oscillator 116 may also be utilized such that when the logical "1" is input at input 106a, the input enables the oscillator 116 to produce pulses with an audio frequency. These pulses are fed through the two inverters 117, 118 to the circuit output to generate an audible alarm signal, such as that generated by the buzzer 119.

Simultaneous to the blinking of the LED 83a and the buzzing of the buzzer 119, the counter 114 is enabled and counts pulses coming from the generator 116. When the counter 114 counts 2n - 1 pulses, its 2n output becomes a logical "1". The logical "1" output from the counter 114 is input into the transistor 115, which subsequently becomes conductive and shunts the output of the inverter 118, thereby disabling the audible alarm signal from the buzzer 119. The 2n output is also connected to the EN input of the counter 114 to disable further counting by the counter 114. Thus, only a continuous blinking of the corresponding LED 83a will notify the driver that the internal pressure of the tire 16a has reached an unacceptable level. The combination of the audible and visual warnings will repeat itself each time the car engine is started, with the audible alarm being disabled after a predetermined time by the counter 114, as described above.

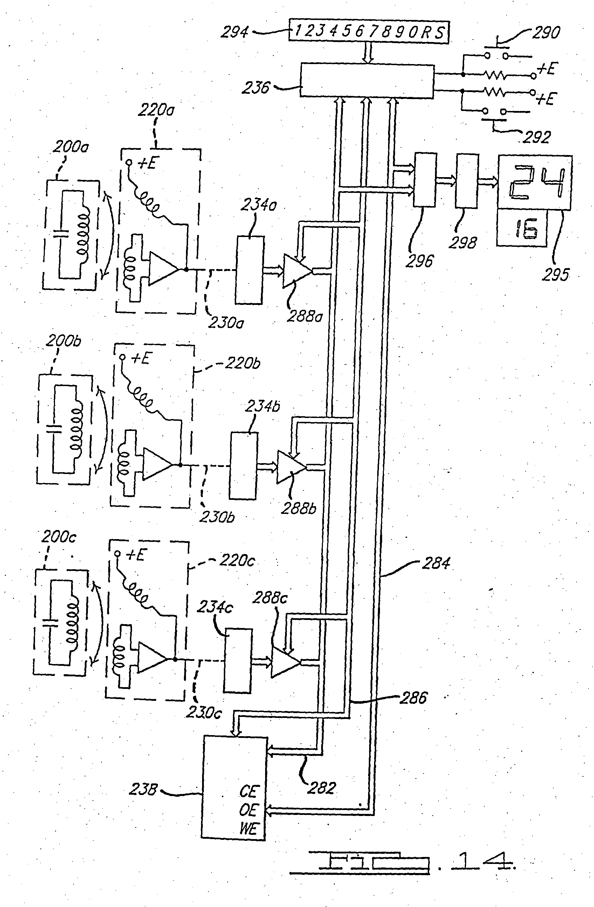

Referring now to Figures 11 through 17, a second preferred embodiment of the present invention will now be described that provides continuous monitoring of the air pressure in the tires of a motor vehicle, with a highly accurate digital readout of the actual tire pressure within each of the tires. This second embodiment is similar in structure and function to the first embodiment described above and is configured as shown in Figure 1, with the following differences.

Referring to Figures 11A and 11B, a sensor transducer according to the second preferred embodiment is mounted within each of the tires 16a-16d and is shown generally at 200. The sensor transducer 200 and 200□ is mounted inside the tire, as described above, and includes an inductor 202 similar in structure and function to the inductor of the sensor transducers 14a-d (Figure 1) described above. However, the capacitor 204 differs from the capacitor of the sensor transducers 14a-d in that it is constructed to produce a ratio proportional to the internal pressure of the tires according to the following relationship:

$$C=f(P)$$

where C is capacitance; and P is internal tire pressure.

Referring to Figure 11A, the capacitor 204 is constructed from a thin metal foil 206 including a dielectric member 208. The dielectric member 208 is constructed from a resilient material such as rigid rubber that has insignificant after-response deflection characteristics. Thus, the dielectric member, upon being deformed, returns to its non-deformed state and shape.

The capacitor 204 includes a first side 209 that, along with the inductor 202, is secured to the inside tire wall through vulcanization as described above or to the rim of the tire as described below. A second side 210 of the capacitor 204 is highly sensitive to the internal tire pressure. The capacitor 204 is compressed as internal tire pressure increases, causing the dielectric member 208 to compress. As the dielectric member 208 is compressed, the value of the capacitance increases. Conversely, as the internal tire pressure decreases, the dielectric member 208 decompresses, thereby increasing the distance between the capacitor sides 209 and 210 and thus decreasing capacitance.

Figure 11B shows the alternative construction of the sensor transducer at 200'. The sensor transducer 200' includes a capacitor 204', which is a thin wall cylindrical capacitor that consists of a cylindrical vessel 206' made from a strong dielectric material, such as nylon coated with conductive film. A first end 208' of the cylinder is hermetically isolated from the air in the tire. A second end 210' of the cylinder is open to the tire air pressure. The cylindrical vessel 206' is filled with a paste 212' or, alternatively, with a non-disbursing high density oil, either of which is electrically conductive. If the conductive paste is used, the paste should have sufficient inter-molecular forces to avoid dispersion of the paste due to tire rotation. The capacitor 204' includes a first lead 214' connecting the first end of the capacitor to the circuit, and a second lead 216' that consists of a thin layer of conductive metal deposited on the cylindrical surface of the vessel to connect the second end to the circuit. Air pressure within the tire penetrates through the vessel opening 210' and displaces the paste 212' to compress a small amount of air 218' within the cylinder 206', thereby varying the capacitance of the capacitor 204' accordingly. The resonant frequency of the sensor transducer 200' is thus proportional to the air pressure inside of the tire.

Referring to Figures 12A-12B, an electrical schematic diagram of a receiver that works in conjunction with the transducers 200 or 200', is shown at 220. The receiver 220 is mounted similar to receiver 20a-d shown in Figure 1. When a tire rotates, the passive sensor transducer 200 creates an unbalanced electrical field between inductors 230 and 232 of the receiver 220 that is a function of the air pressure inside the tire. The receiver 220 is permanently secured on the wheel axle and adjacent to the sensor transducer 200, as shown in the Figure 1, in close proximity to the tire wall 30. When the transducer 200 acts upon the inductors on each rotation of the tire, a train of rectangular pulses having a frequency equal to the resonant frequency of the contour of the circuit 200 will be developed, as shown at 233 in Figure 12B. The duration of each train of pulses tn1, tn2, tn3, etc., varies with the vehicle speed.

Referring to Figure 12A, the physical structural principle behind the transducer/receiver interaction has been described above in detail. The only difference between the first and second embodiments is that a transistor 234 (Figure 12A) operates as a current switch by generating strong current pulses into the LED interface 80. All other circuit components of the receiver 220 are identical to those in the receiver 90 described in conjunction with the first preferred embodiment described above.

As has been discussed, the frequency of oscillation at the output of the receiver 220 equals the resonant frequency of the transducer contour, as is shown at 233 in Figure 12B.

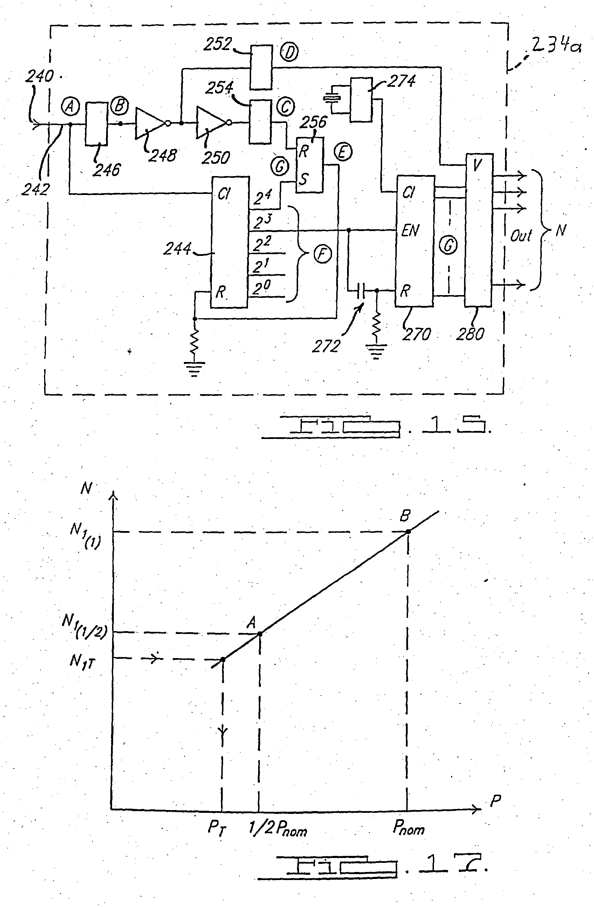

Figure 13 displays at 240 a relationship between a period of oscillation T at the output of the receiver 220 and a pressure inside the tire under the constant value of the inductor 202 (Figures 11A, 11B). The curve is nonlinear in a wide range of the pressure changes. However, within a working range from 15 to 40 psi this curve is relatively linear with only 5% tolerance. The dashed line 242 provides a theoretically linear characteristic compared to actual response shown at 244.

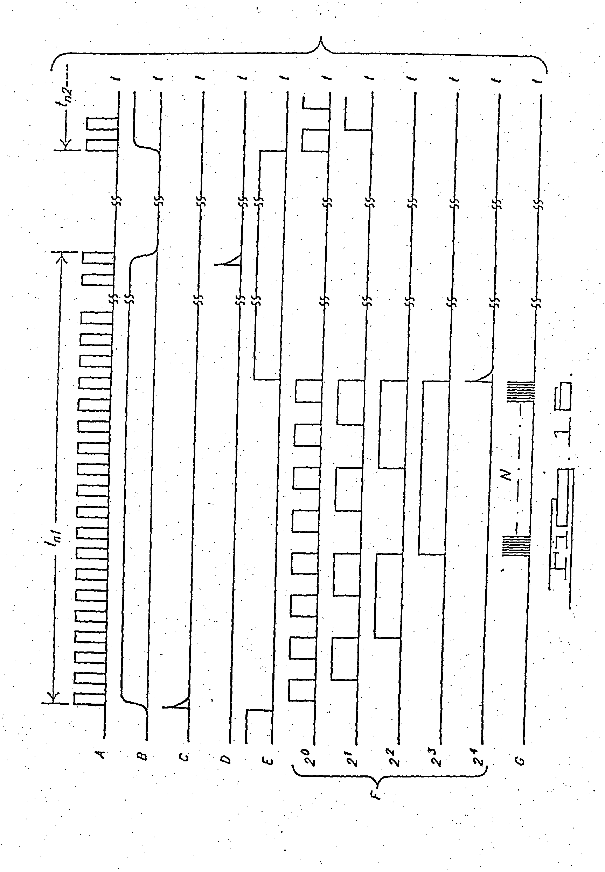

Figure 14 is a functional overall system diagram illustrating control, measure and display of the current tire pressure in each tire according to the teachings of the second preferred embodiment. While only three sets are shown for illustrative purposes only, four sets of sensor transducers 200a-d and receivers 220a-d are typically utilized, one set for each wheel. Sensor transducers 200a-c are coupled with corresponding receivers 220a-c. When the tires rotate, the coupling between the transducers 200 and the receivers 220 produces a train of pulses at the output of the receivers 220, as shown in the Figure 12B. The duration of the pulse period at the output 230a of the first receiver 220a is determined by the resonant frequency fp1 of the contour in the transducers 200, as follows:

$$T1 = \frac{1}{fp1},$$

Duration of the pulse period at the output 230b of the second receiver 220b is determined by the resonant frequency fp2 of the contour located in the second transducer 200b:

$$T2 = \frac{1}{fp2},$$

etc. All receiver outputs 230a-c in Figure 14 are wired to inputs 232a-c of A/D converter blocks 234a-c. The A/D converter blocks 234a-c transform the time interval, that is proportional to one or several periods, into a serial string of discrete data that can be read by a microprocessor 236. This string of data is stored in a memory chip 238 until a new string of data generated from a second turn of the same tire replaces the first stored string of data. All converter blocks work in the same manner. As a final result, a value of the current tire pressure is stored at the output of each A/D converter block 234a-c.

Figure 15 shows a functional block diagram of, for example, the A/D converter 234a shown in Figure 14. Generally, the A/D converter 234a includes an input 240 and a detector input 242. Both a counter 244 and an amplifier are connected to the peak-detector 246 at the input 242. Two signal inverters 248, 250 are coupled to the differential networks amplifier 252 and 254. An output from differential network 252 is connected to an enable output of a storage register 280. When the last train of pulses is detected at the output of inverter 248, the output records the train pulses into the storage register 280. The output of the amplifier 254 is coupled to an input of an RS trigger 256, which in turn reset the counter 244 upon the occurrence of predetermined conditions described below. A second counter 270 is coupled to both the first counter 244 and to a quartz generator 274 and is operative to selectively enable an input to the register 280, as will be described in more detail below.

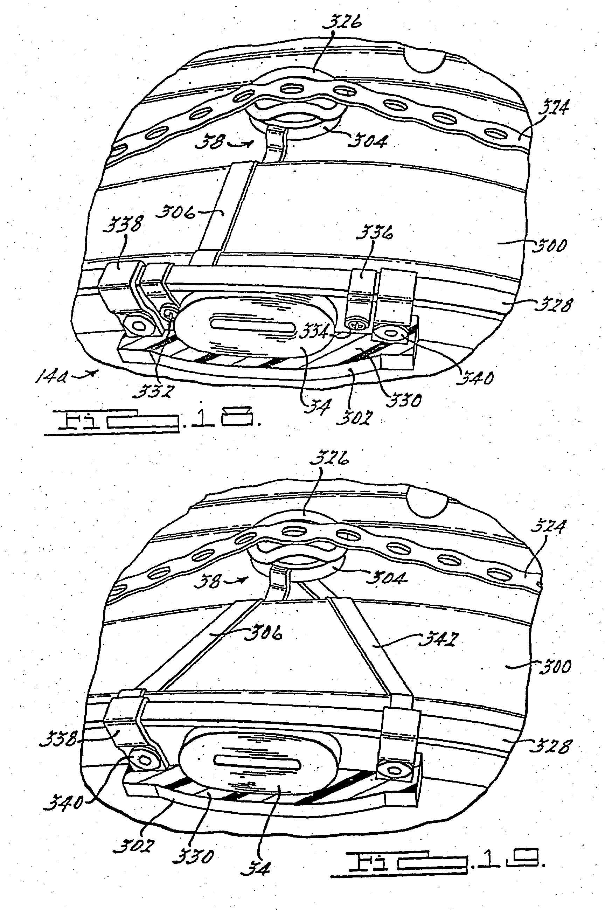

Figure 16 shows a histogram of voltages measured in different points of the system. A train of pulses with duration of tn is fed into the A/D converter input 240. The shape of the signals at the input of the A/D converter 234 is shown at A in both Figures 15 and 16. These signals are fed into the input 242 of the detector 246 and into input "CI" (clock) of the first counter 244, with the detector input voltage being represented at B in Figures 15 and 16. After the signals have been amplified by the peak-detector 246 and shaped by two inverters 248, 250, the front edge of the pulses are differentiated by differential networks 252, 254. The output from the differential network 252 is fed into the trigger 256 resetting it to logic "0". The output voltage from the trigger 256 is shown in Figure 16 at E. As soon as the output of the trigger becomes "0", the first counter 244 starts counting pulses that arrive from the receiver 220a.

Voltage histograms of all output registers of the counter 244, that is 20, 21, 22, 23, 24, are shown at F in Figure 16. The voltage from output 23 of the first counter 244 is fed into an "enable" input of the second counter 270. Simultaneously, the front edge of the pulse that is fed into the second counter 270 that is fed into the second input "R" of the counter 270 is differentiated by the RC network 272. The front edge of the incoming pulse resets all output registers of the second counter 270 to "0". At the same time, input "CI" of the second counter 270 is fed from the quartz generator 274 and starts counting pulses. The counting of these pulses is shown at G in Figure 16 and continues until the "enable" input of second counter 270 receives a logic "1". As soon as a logic "0" at the output 23 of the second counter 270 is registered, the counter 270 stops counting. At the same time when a logic "1" is registered at the 24 output of the first counter 244, the RS-trigger becomes reset, that is when its output "E" becomes "0", it resets all outputs of the first counter 244 to "0".

The number of pulses, shown at G in Figure 16, from the quartz generator 274, counted by the second counter 270 remains intact until a second train of pulses arrives from the receiver 220a. This train of pulses has a duration of tn2. At the end of the first train of pulses from the receiver 220, a falling edge of the pulse at the input of the detector 246a is differentiated by the differential amplifier 254. This pulse, which is graphically illustrated at D in Figure 16, makes a "write" command of all outputs from the counter 270 to the output register 280. When the second train of pulses is registered at the input of the inverter block with duration tn2, the above mentioned sequence repeats.

As can be appreciated from the foregoing description, the inverter block from every train of pulses arriving from the receiver 220 forms a time interval such as the time interval F from the 23 output of the first counter 244, which is equal to eight periods of the input frequency of the receiver 220a. Subsequently, the inverter modifies the time interval at the output 23 into a binary code "N" that is proportional to the formatted pulse duration. This code is stored in the output register 280. In general terms, in order to increase the accuracy, this conversion can be performed with a random selected time interval that is a product of n-pulses of the input frequency. An increased accuracy and reduced tolerance can be achieved by either increasing the duration of the formed time interval or by increasing the frequency of the quartz generator 274 that fills the time interval.

Referring again to Figure 14, digital data taken from the outputs of the inverters is processed by the microprocessor 236. The microprocessor 236 is connected to the programmable memory 238, by means of a data-bus 282, address-bus 284 and a control-bus 286. The control-bus 286 is used to send control commands of synchronization and direction of the control flow to all parts of the circuitry shown in Figure 14. Buffer amplifiers 288a-c are utilized and are necessary for increasing the load capacity of the inverters. The control-bus 286 may be also required to have buffer amplifiers (not shown). All buffer amplifiers are equipped with "three-state" outputs.

The memory block 238 is programmable through a "write" command button 290, and an "erase" command button 292. Both buttons are located next to the touch-screen display 294, which is capable of displaying digits from 0 to 9 and which includes a reset button and a set button (not shown). The interface is capable of displaying the pressure in any tire, such as 24 psi in the front right-hand tire 16a, 295 or for any particular tire such as the tire identified as tire #16 at 295 in the case of a tractor-trailer. The interface touch-screen display 294 is connected to the data-bus 282 and to the control-bus 286 through an analyzer 296 and a digital interface driver 298.

When a motor vehicle is initially equipped with the TPMS 10 according to the second preferred embodiment, an initial setup of the pressure monitor system by the driver can be performed as follows. First, each tire is inflated to ½ of its rated pressure. Next, the driver activates the display interface 294 by touching the number on the display that corresponds to the tire number being selected for the setup. After the delay interface 294 is activated, the driver activates the set button 290 to generate a "write" command. In this case, the microprocessor 236 selects an appropriate bus and makes a recording of the code arriving from the inverter to the memory 238. For example, the first recording of ½ inflated tire pressure information is A, as shown in Figure 17, with a value N1(1/2).

Subsequently, the tire is inflated to its rated pressure and a new value of the air pressure is recorded into address B. When both the ½ inflated and full rated pressure in all tires have been recorded, pressure valves are stored in the memory for each tire of the vehicle. These values correspond to ½ of the rated pressure shown as ½ P and Pnom in Figure 17 at points A and B with the coordinates being N1(1/2),½ Pnom for point A and the coordinates being N1 (1), Pnom for point B.

When the vehicle is in motion and the tires are rotating, the microprocessor 236 operates as follows. First, a clock pulse (not shown in Figure 14) generates a "read" command from the first A/D converter block 234a and makes a "write" command of the obtained code to the internal memory of the microprocessor 236. Next, the microprocessor 236 makes a comparison of the current value of the code with the code N1(1/2). If result of the comparison is less than the stored one, then the processor displays a tire number, and its air pressure. This value (Nt, the current value) is calculated by the microprocessor 236 by way of linear interpolation between the two known points, as shown in Figure 17. When the result of the comparison is greater than the one that has been stored in the memory, then no warning will be displayed on the operator interface 294. Other tires are scanned in the same manner.

As soon as all values of the current pressure in each tire are recorded after each turn of the tires, the continuous pressure indication on the operator interface 294 will take place. This is the most important in case of deflated tires when a close monitoring of the pressure is highly critical for the safety of the driver. Even if air pressure in every tire is normal, the driver is capable of monitoring the pressure in any tire. It may be required, for instance, when driver wants to know the status of tire pressure before driving a car. The only thing he has to do is to press "Set" button 290 on the touch-screen, and the display will show the tire number and its pressure, one at a time.

By selecting any specific tire, by pressing its number, the driver can display the air pressure in that tire. The "Reset" button is required for the initial setting of the operator interface 294 by placing it into automatic mode of control and monitoring. The microprocessor 236 also allows the receivers 220 to be tuned automatically.

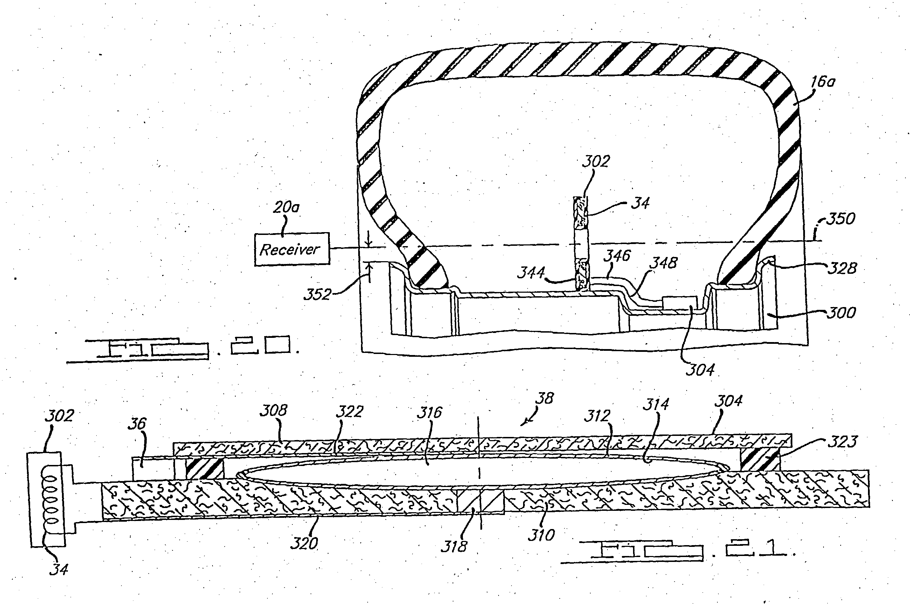

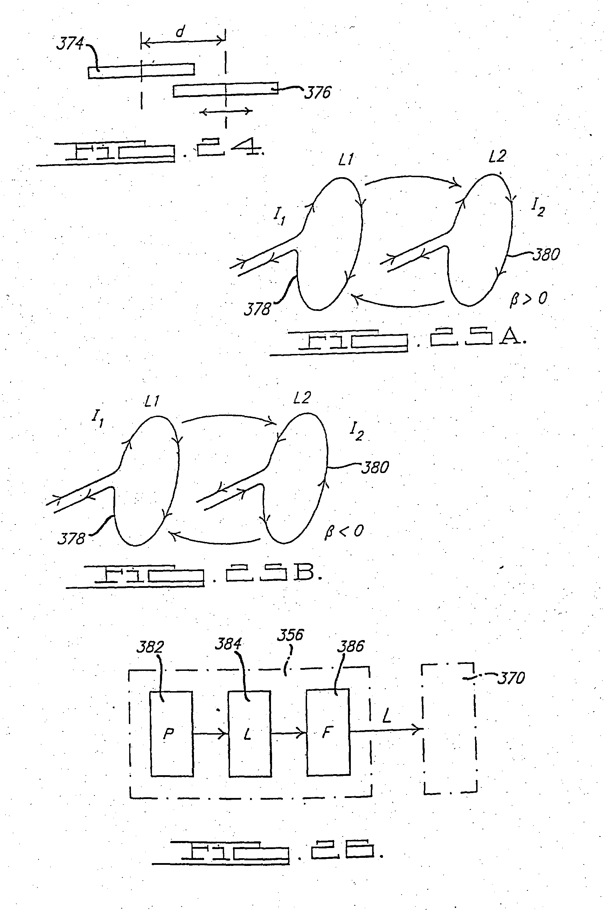

Referring now to Figure 18, the sensor transducer 14a employed in the first preferred embodiment of the present invention is shown coupled to a rim 300 which receives tire 16a. The sensor transducer 14a includes a first housing 302 and a second housing 304 in electrical communication with one another, via a conductor 306 and the rim 300. The first and second housings 302 and 304 contain the circuit 32 and includes the inductor 34, the capacitor 36 (see Figure 21) and the switching element 38.

The housing 304 which contains the switching element 38, shown in detail in Figure 21, includes a top fiberglass cover 308 and a lower fiberglass base 310. Positioned between the top cover 308 and the base 310 is a switching contact or pressure sensor 312 formed from a pair of conductive or flexible disks 314 which are identified as numeral 42 in Figure 2. The pressure sensor 312 formed from the pair of disks 314 is hermetically sealed to create a substantially sealed air cavity 316. The pressure sensor 312 is either in electrical contact with the rim 300, via conductive mounting 318 soldered to the rim (see Figure 18) or to a first foil conductor 320, via the conductive mounting 318. The pressure sensor 312 is further in electrical communication with a second conductor 322 which is adhered to the underside of the top cover 308. The top cover 308 and the base 310 are separated by an annular shaped insulator 323 which enables the sensor 312 to expand or contract, via the chamber 316, to either open or close the circuit 32 shown in Figure 2. In this regard, when the tire pressure drops below a predetermined pressure, the sensor 312 closes causing the conductor 320 to be placed in series with conductor 322, via the conductive mounting 318 and the conductive sensor 312. The first housing 304 further includes a surface mounted capacitor 36 in electrical communication with conductor 322 and in parallel with the inductor 34 housed within the first housing 302.

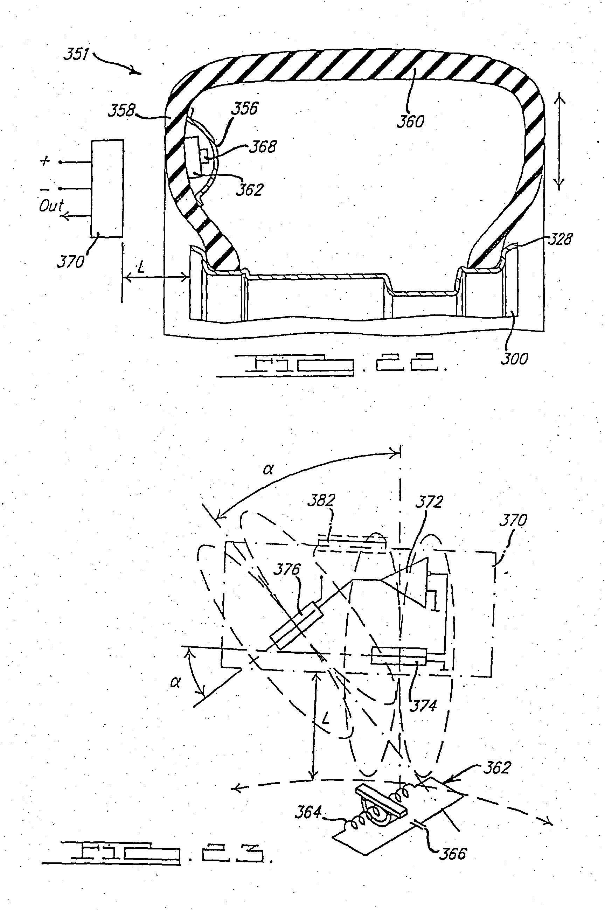

Referring again to Figures 18 and 19, the sensor transducer 14a housed within the first housing 302 and the second housing 304 are shown secured to the rim 300 with a first mounting technique and a second mounting technique, respectively. In each technique, the second housing 304 is secured to the inside of the rim 300 by way of an appropriate adhesive. To provide further securement of the housing 304 within the rim 300, an adjustable metal band 324 is wrapped about the inside of the rim 300 and engages an O-ring 326 positioned about the housing 304. The metal band 324 rides atop the O-ring 326 to provide appropriate clearance for the flexing of the sensor 312. Alternatively, a resilient nylon belt or other appropriate securement mechanism may be used in place of the adjustable metal band 324.

Using the first mounting technique as shown in Figure 18, the conductive mounting 318 is soldered directly to the rim 300 to create a first conductive path. The second conductor 322 extending from under the top cover 308 and from the capacitor 36 is in communication with the conductive foil 306 which is insulated from the rim 300 and is routed transversely to an edge 328 of the rim 300. The conductive foil 306 wraps about the edge 328 and is secured to a polyethylene body 330 of the housing 302 by way of a screw 332. One end of the inductor 34 is in electrical communication with the foil 306, via the screw 332. The other end of the coil 34 is in electrical contact with the edge 328 of the rim 300, via a second mounting screw 334 and a second foil 336 which is in electrical contact with the edge 328. The inductor coil 34 having approximately 230 turns is encapsulated within the polyethylene body 330, shown cut away in Figure 18. The coil 34 is secured to the edge 328 of the rim 300 by way of a pair of curved metal clamps 338 which are riveted within the polyethylene body 330 of the first housing 302 by way of rivets 340. The curved clamps 340 are operable to resiliently engage the edge 328 of the rim 300 to secure the inductor 34 adjacent the outside of the rim 300. In this way, the receiver 20a is positioned on the vehicle body adjacent to the inductor 34, as shown in Figure 1, such that the inductor 34 is positioned along a plane that is substantially parallel to the plane of the inductors 62 and 64 in the receiver 20a.

Turning now to Figure 19, the sensor transducer 14a is shown mounted to the rim 300 by means of a second mounting technique. In this regard, like reference numerals will be used to identify like structures with respect to Figure 18. By using this second technique, the rim 300 is no longer used as a conductive medium and is replaced by a second conductive foil 342 which is also insulated from the rim 300. In this regard, conductor 322 of the switching element 38 is in electrical communication with foil 306 and the conductor 320 of switching element 38 is in electrical communication with foil 342. Additionally, foil conductors 306 and 342 are routed to the edge 328 of the rim 300 leaving an exposed contact area which is insulated from the rim 300. These exposed contact areas are contacted by the underside of the resilient conductive clamps 338 mounted to the housing 302 by way of the rivets 340, each of which are in electrical contact with one end of the inductor 34 to complete the circuit path.

In this way, the tire 16a may be mounted on the rim 300 without the first housing 302 of the sensor transducer 14a being secured to the edge 328 of the rim 300. Once the tire 16a is mounted to the rim 300, the first housing 302 of the sensor transducer 14a housing the inductor 34 is then simply engaged with the exposed contact surfaces of foil 306 and 342, similar to the way a conventional wheel weight is secured to an edge of a rim. In other words, the top surface of the conductors 306 and 342 are exposed, while the undersurface of the conductors 306 and 342 are insulated from the rim 300 such that the underside of the resilient clamps 338 contact the exposed conductive portion of the foil conductors 306 and 342 once the first housing 302 is attached to the edge 328 of the rim 300.

Turning now to Figure 20, a third mounting technique for mounting the sensor transducer 14a to the rim 300 is shown. Here again, like reference numerals will be used to identify like structures with respect to Figures 18 and 19. With this construction, the inductor coil 34 is shown mounted substantially perpendicular to the inside of the rim 300 by way of a flexible attachment mechanism 344, such as a rubber adhesive which may encapsulate the entire inductor coil 34 to form the first housing 302. The inductor coil 34 is also positioned along a plane that is substantially parallel with the plane of the inductor 62 and 64 of the receiver 20a. The switching element 38 is shown housed within housing 304 and secured to the rim 300 adjacent to the inductor 34. The housing 304 is preferably secured to the inside of the rim 300, as is shown in Figures 18 and 19 with two foil conductors 346 and 348 being positioned in electrical contact between the inductor coil 34 and the housing 304 to complete the circuit 32. It should be noted that in this embodiment, the central axis 350 of the inductor coil 34 is positioned above the edge 328 of the rim 300 to provide a positive exposure area 352, thereby enabling electromagnetic coupling with the receiver 20a. In addition, the inductor coil 34 is positioned adjacent to the sensor 20a by a distance between the range of about zero (0") inches to about seven (7") inches.

The three (3) mounting techniques identified above and shown in Figures 18-20 provide an effective way to mount the sensor transducer 14a relative to the receiver 20a without having to modify the tire 16a such as by incorporating the sensor transducer 14a within the sidewall of the tire 16a. These configurations, therefore, provide further versatility in that any type of tire may be mounted on the rim 300 as long as the rim 300 is configured to receive the sensor transducer 14a, as shown in Figures 18-20. In addition, it should be further noted that the rim 300 is a conventional rim and no modification is needed to the rim 300 other than securing the sensor transducer 14a housed within housings 302 and 304, as shown.

Referring now to Figures 22-30, a third preferred embodiment of the present invention will now be described that provides continuous monitoring of the air pressure in the tires of a motor vehicle, with a highly accurate digital readout of the actual tire pressure within each of the tires. This third embodiment is similar in structure and function to the first and second embodiments described above except that the sensor employed in the third preferred embodiment uses a variable inductance versus a variable capacitance as with the second preferred embodiment. Moreover, it should be noted that the sensor transducer disclosed herein together with the receiver are able to remotely measure the pressure in the tires, as well as other parameters such as temperature and other physical characteristics of an environment inside of a moving or rotating object.

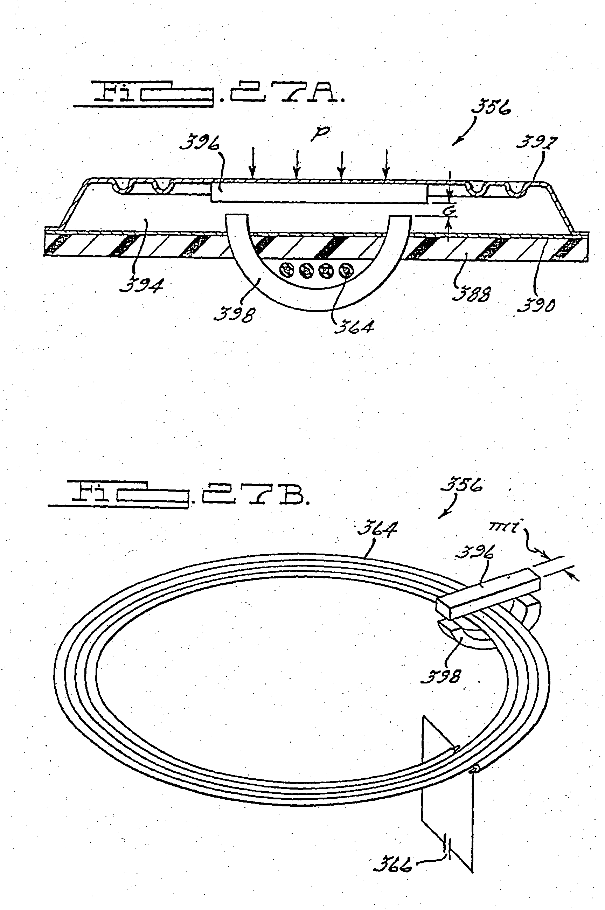

Referring first to Figure 22, Figure 22 illustrates the general structure of the tire pressure monitoring system (TPMS) 354 according to the teachings of the third preferred embodiment of the present invention. The TPMS 354 is secured to the vehicle similar to that shown in Figure 1. In this regard, the TPMS 354 includes a passive sensor transducer 356 located on the inner edge 358 of the tire 360. Here again, the sensor transducer 356 consists of a resonance tank 362 formed by an inductor 364 and a capacitor 366 (see Figure 23), along with a pressure transducer 368. The TPMS 354 also includes a receiver 370 mounted on one of the wheel suspension parts so that its distance L to the sensor transducer 356 remains substantially constant at a distance between the range of about zero (0") inches to about seven (7"). The pressure transducer 368 located inside of the tire 360 transforms the tire pressure changes into inductance changes of the inductor 364, further discussed herein. It should be noted that in describing the third preferred embodiment of the TPMS 354, a single tire 360, sensor transducer 356, and receiver 370 are discussed. However, those skilled in the art would recognize that each tire on the vehicle may include such a system, as shown clearly in Figure 1. Moreover, this system may be mounted to the rim 300 similar to that shown in Figures 18 - 20.

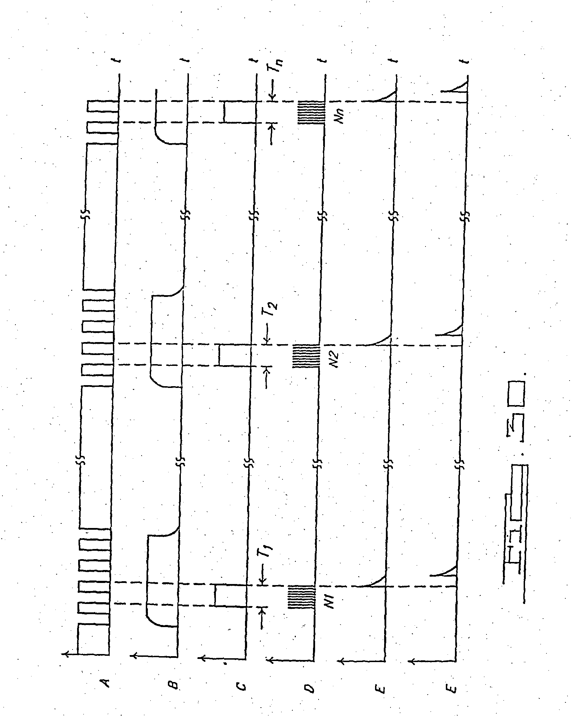

Figure 23 illustrates the main physical principle behind the TPMS 354 as was previously discussed with respect to the first and second embodiments and further discussed herein. The receiver 370 includes an amplifier 372 along with a first inductor 374 and a second inductor 376 that are positioned at an angle α with respect to each other. The positioning of the inductors 374 and 376 provides for an inductive electromagnetic coupling between themselves. The inductors 374 and 376 are arranged relative to one another at the angle α generally when the inductors 374 and 376 are constructed as multi-turned coils about a bobbin having a large width. In other words, a first series of loops may be wrapped about the bobbin along its entire width, with subsequent series of overlapping loops following along the entire width of the bobbin. The same coupling effect can also be achieved by axially positioning substantially flat inductors 374 and 376, as shown in Figure 24. In this regard, the axial distance d may be adjusted similar to the angle α to adjust the inductive coupling between the inductors 374 and 376. In this configuration, the inductors 374 and 376 are preferably constructed similar to that shown in Figures 27 and 28, whereby each turn of the coil forming the inductor is turned upon the next turn to provide a substantially flat, spiral-like coil versus coils being positioned next to or adjacent one another by use of a wide bobbin.

Here again, the inductors 374 and 376 are positioned relative to each other, via the angle α or the distance d to provide a substantially zero or negative feedback, thereby placing the receiver 370 in a "waiting" or non-oscillating mode which produces no output oscillations when the sensor transductor 356 is not in operative proximity to the receiver 370. The frequency and amplitude of the oscillation of the amplifier 372 depends on its amplification co-efficient and on the level of feedback provided by the two inductors 374 and 376 and the resonance frequency of the sensor transductor 356. By positioning the resonance tank 362 housing the inductor 364 and capacitor 366 in close operative proximity to the two inductors 374 and 376, positive feedback or an "active" oscillating mode is created and can be changed by the coupling effect created between the resonance tank 362 and the two inductors 374 and 376, as shown in Figure 23.

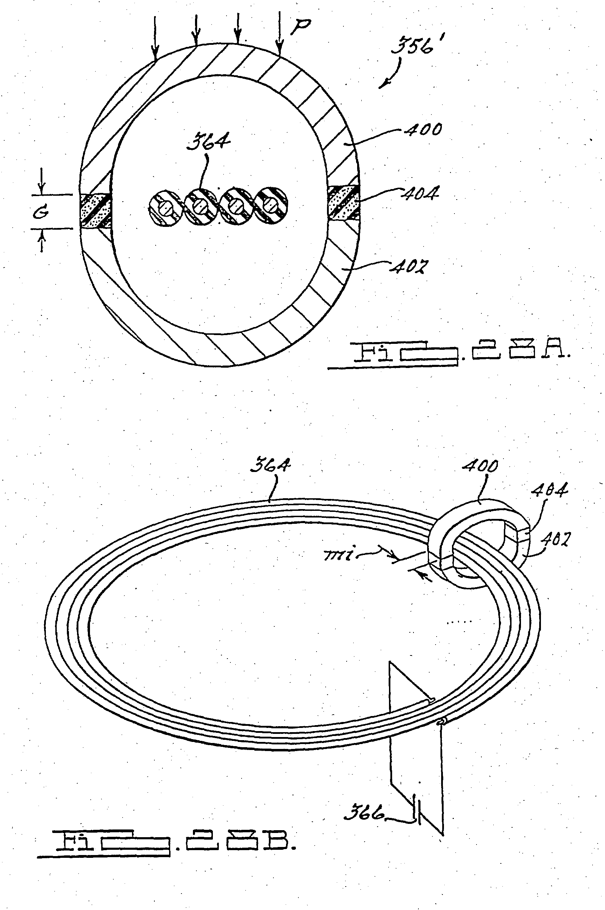

Figure 25A shows one loop 378 of inductor 374 and one loop 380 of inductor 376 with the coupling currents I1 and I2 shown flowing in the same direction. If the inductors 374 and 376 are positioned differently in space, the currents I1 and I2 may flow in the opposite directions, as shown in Figure 25B. If the coupling currents I1 and I2 are flowing in the same direction, a positive feedback is created in the amplifier 372. Respectively, if the currents I1 and I2 are going opposite one another, then a negative feedback is created in the amplifier 372.

A phase balance of the amplifier 372 occurs when the level and the phase of the negative feedback are equal to the level and the phase of the positive feedback. Positive (or negative) feedback can be arranged by connecting the output and input of the amplifier 372, by using a resistor along this feedback path. The value of this resistor can also be adjusted to compensate for negative (or positive) feedback created by the inductors 374 and 376. Here again, the inductors 374 and 376 can be positioned and spaced under a different angle a or distance d, as shown in Figures 23 and 24, which will change the level and the phase of the feedback. If a positive feedback created by the resistor is stronger than the negative feedback created by the two inductors 374 and 376, then the amplifier 372 is in an "active" oscillating mode. If negative feedback is equal or stronger than the positive feedback, then the amplifier 372 is in a "waiting" non-oscillating mode producing no oscillations, which is the desired configuration of the present invention. In other words, the feedback can be adjusted either positively or negatively based upon the positioning of the inductors 374 and 376 and on the value of the resistance in the feedback path. The resistance essentially adjusts the sensitivity for distortion purposes, after the inductors 374 and 376 have been appropriately positioned. The sensitivity of the amplifier 372 which is essentially determined by the feedback resistance determines how much the phase shifts either positively or negatively, while the positioning of the inductors 374 and 376 determine where the phase shifts from a positive to a negative feedback.

For the purpose of fine tuning the coupling effect between the two inductors 374 and 376, a thin strip of metal 382 can be used, as shown in Figure 23, and as shown and described in regard to Figure 6. By changing the position of the strip of metal 382, in the mutual electro-magnetic field of the two inductors 374 and 376, the field configuration can be changed resulting in stronger or weaker coupling effects between the inductors 374 and 376. In other words, the thin strip of metal 382 may be used to increase or decrease the electro-magnetic coupling effect between the inductors 374 and 376 to tune up the receiver 370 during the manufacturing process of the receiver 370 to compensate for tolerance effects. The same technique can also be used to adjust the sensitivity of the receiver 370 with respect to influence of the resonance tank 362 that is positioned in close proximity to the receiver 370. Assuming that the amplifier 372 is in a "waiting" mode (meaning its positive feedback is compensated by inductive negative feedback), then by positioning in close proximity, the resonance tank 362 which is tuned to the same frequency as the amplifier self-oscillating frequency, can thereby shift the phase balance of the amplifier 372 and create an oscillation with an amplitude and frequency that depends on the resonance tank 362 overall impedance. On the other hand, the pressure transducer 368 that transfers pressure into inductance change of the resonance tank inductor 364 can provide the conditions to transmit these changes to the receiver 370 by changing its phase balance.

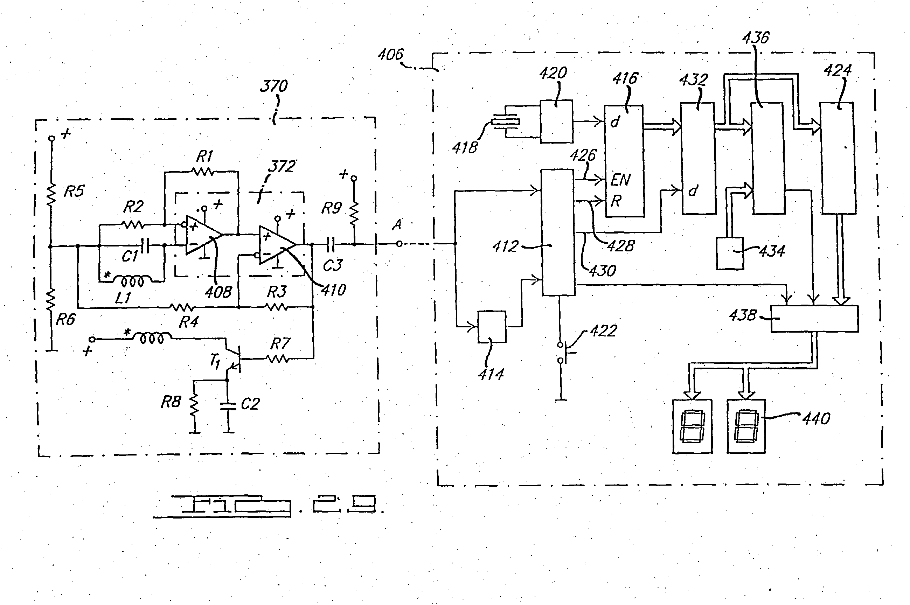

The above described logic is illustrated in Figure 26. In this regard, the sensor transducer 356 translates tire pressure P, identified in block 382, which is sensed by the pressure sensor transducer 368 into a change of inductance L of the inductor 364, identified by block 384, as a result, this leads to a change of the resonant frequency F of the resonance tank 362, identified by block 386. This new resonance frequency F influences the phase of the feedback created by the two inductors 374 and 376 in the receiver 370. This influence results in an oscillation change of the amplifier 372, which can be measured and correlated, with the actual pressure change.

Referring now to Figures 27A and 27B, the passive sensor transducer 356 according to the teachings of the third preferred embodiment of the present invention is shown in detail. The passive sensor transducer 356 does not require any power source and includes a rigid insulator base 388 having a conductive surface 390. A thin metal spring-like or resilient diaphragm 392 is soldered or glued to the base 388 to form a hermetically sealed air chamber 394 which contains air under normal atmospheric pressure. A small rectangular piece of ferrite 396 having a high level of permeability is affixed to the inner surface of the membrane or diaphragm 392. A "horseshoe" or "U-shaped" piece of ferrite material 398 is permanently mounted on the base 388 and is also hermetically sealed relative to the chamber 394. The flat inductor 364 having four (4) turns or coils with a diameter of about one point five (1.5") inches to about two (2") inches is mounted on the outer side of the base 388 and is positioned between the base 388 and the "horseshoe" or "U-shaped" piece of ferrite material 398. Also coupled to the inductor 364 is the capacitor 366, shown clearly in Figure 27B. This construction forms an inductor 364 with a ferro magnetic core formed from 396 and 398 that has a variable gap G that varies depending on the pressure P applied to the membrane 392. When pressure P is applied to the sensor transducer 356, the diaphragm or membrane 392 is flexed downward, thereby changing the distance of the gap G in the ferrite core that is formed by ferrite components 396 and 398. The sensor transducer 356 is very sensitive in that even a very small gap changes G of a few microns causes the inductance L of the inductor 342 to change significantly up to about 300 to 900 percent from its original inductance L without the ferrite core. The preferable distance for the gap change G is between about 0 $\mu$m to about 500 $\mu$m. This inductance change is possible because of the high permeability level of the ferrite material used for the ferrite components 396 and 398 which provides a permeability $\mu$ of about 10,000.

Turning to Figures 28A and 28B, a second embodiment of the sensor transducer 356' is shown. The sensor transducer 356' is substantially similar to the sensor transducer 356, shown in Figures 27A and 27B, except that a pair of "U-shaped" ferrite components 400 and 402 are positioned about the inductor 364. A pressure sensitive rubber foam material 404 containing many micro-bubbles of air captured inside the foam material 404 and sealed under normal atmospheric pressure is positioned between the ferrite component 400 and 402 within the gap G. By applying an external pressure P, the material 404 will shrink to provide a change in the gap G of the ferrite core formed by the "U-shaped" components 400 and 402. Here again, the change in the gap G causes the inductance L of the inductor 364 to be changed significantly.

For both sensor constructions shown in Figures 27 and 28, the inductance change of the flat inductor 364 can be described as follows:

$$L = (w^2 mi)/R_b \qquad (1)$$

Where

w$^2$ -     is the number of turns in the flat inductor 364
mi -     is the length of the inductor portion covered by the ferromagnetic core (see Figures 27B and 28B).
$R_b$ -     is magnetic resistance of the air gap (G).

Respectively, $R_b$ can be described as follows:

$$R_b = 80,000,000 \cdot G/S_2 \cdot \mu_o \tag{2}$$

Where

$S_2$ -     is the cross section of the ferrite core

$\mu_o$ -     is permeability

By combining these two formulas (i.e. 1 and 2) we will see that inductance L can be described as:

$$L = w^2 \text{mi } S_2 \mu_o/80,000,000G \tag{3}$$

From this formula we can see that even a very small variation in the gap distance (G) can result in significant change of inductance (L).

On another hand, using well-known formula for the resonance frequency in the L-C parallel resonance tank 362, we can see how the sensor resonance frequency is changing with the gap variation under pressure:

$$F = 1/2\pi\sqrt{LC} = 1/2\pi\sqrt{w^2 mi S_2 \mu_o/80,000,000G} \tag{4}$$

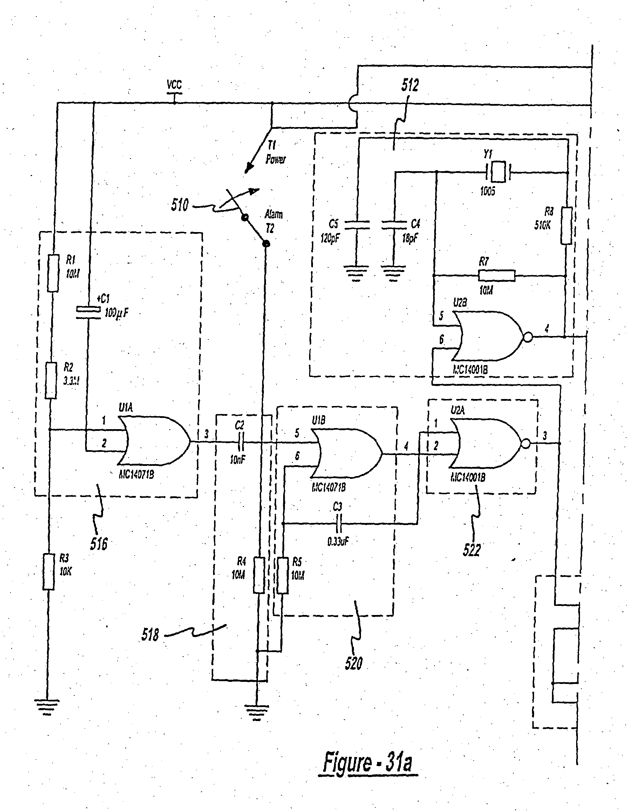

Referring now to Figures 29 and 30, the receiver 370 along with a digital display interface 406 are shown in detail along with the corresponding output waveforms. The receiver 370 includes a two stage amplifier which forms the amplifier 372 in Figure 23. The two-stage amplifier 372 includes a first op-amp 408 in electrical communication with a second op-amp 410. Resisters R1, R2, R3 and R4 determine the amplification level, as well as the feedback sensitivity of the two-stage operational amplifiers 408 and 410. Resisters R1, R2, R3 and R4 also form the feedback path for the two-stage amplifier 372. Receiver coil L1 and capacitor C1 form an input resonance tank. Receiver coil L2, via transistor current amplifier T1 is connected to the output of the second operational amplifier 410. Resisters R5 and R6 are used for regulating the level of the DC current through the operational amplifiers 408 and 410 and act as a voltage divider. Resisters R7, R8 together with capacitor C2 are used for setting the mode and biasing the transistor T1.

When the sensor transducer 356 having the pressure sensitive ferrite core enters or crosses the electromagnetic field of the two inductors L1 and L2 of the receiver 370, a pack of square wave oscillations, as shown in Figure 30A is produced at the output of the second operational amplifier 410 at point A, shown in Figure 29. The oscillation frequency of the square waves depends on the measuring pressure and the duration of the square waves depends on the speed of the tire rotation. The square wave oscillations enter the digital display device 406 which Converts the analogue measurements into a digital output. The square wave oscillations are first applied to a pulse former 412 which is a function generator that can adjust frequency and duty cycle along with being applied to a pulse detector 414. The pulse former 412 along with the pulse detector 414 form digital pulses that are counted by a counter 416 which is synchronized by a quartz resonator 418, via a pulse former 420. The output wave forms from the pulse detector 414 are shown in Figure 30B. A switch 422 activates the pulse former 412 upon engaging the switch 422.

A programmable memory 424 retains or holds a "truth table" for the relationship between the frequency and the actual digital representation of the measured pressure. At output 426 from the pulse former 412, square wave pulses, as shown at Figure 30C, which represent the time when all the transition processes are over is output and the counter 416 can therefore, reliably determine the actual frequency, shown in Figure 30D, that is coming from the analogue receiver 370. When the square wave pulse on the output 426 is over, two additional pulses are formed. First, at output 428 of the pulse former 412, shown in Figure 30E, and a second pulse at the output 430 of the pulse former 412, shown at Figure 30F. The first pulse resets the counter 416 and the second pulse flips a trigger 432 for allowing the counted number from counter 416 to be compared to a fixed number stored in a memory 434 of the microprocessor 436. The result of this comparison is transferred by the programmable memory 424 into a signal which is through a LCD driver 428 thereby controlling the digital representation of the measured pressure on a display 440.

The third preferred embodiment of the TPMS 354 is operable to accurately identify the pressure within a tire by use of the sensor transducer 356 which varies the inductance L of the inductor 364, via the ferrite core. The receiver 370 is preferably configured to be in a "waiting" non-oscillating mode, whereby the orientation of the inductors 374 and 376 creates a negative feedback between the input to output of the amplifier 372 in this mode. When the sensor transducer 356 is positioned in operative proximity to the receiver 370, the receiver changes from a "waiting" mode to a "active" oscillating mode where the oscillating varies depending on the resonance frequency of the resonance tank 362. The resonance frequency varies depending on the tire pressure and therefore changes the oscillation frequency of the amplifier 372 which may be correlated to relate to this frequency change.

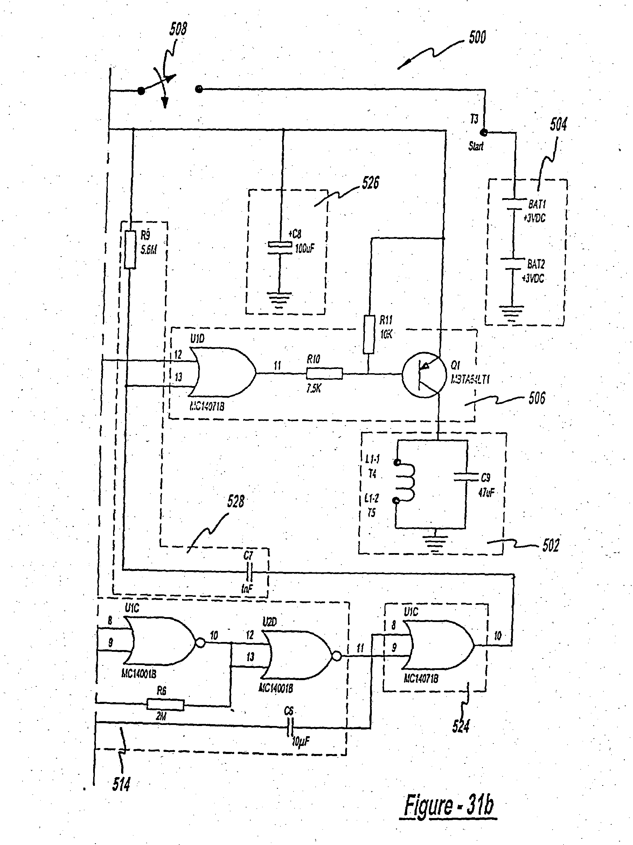

Referring to Figures 31-35, an active sensor 500 according to the teachings of a fourth preferred embodiment of the present invention is shown. The active sensor 500 may be used in place of the passive sensors disclosed herein to provide for an increased operating range with respect to the receivers, disclosed herein. In this regard, by use of the active sensor 500, the active sensor 500 may be positioned in a range of about 50 centimeters to about 100 centimeters relative to a receiver which is an increase of about 25 times the range compared to the use of a passive sensor. The active sensor 500 also enables the use of a smaller inductor (L) as opposed to some passive sensor systems. The active sensor 500 is mounted within a tire (16) similar to that shown in Figure 1.

The active sensor 500 includes an LC circuit 502 formed by inductor L1 and capacitor C9, along with a power source 504 formed by a pair of +3 volt batteries aligned in series to power the overall active sensor 500. The output from the resonant tank or LC circuit 502 is amplified by way of an amplification circuit 506. To power up the active sensor 500, a roll switch 508 and a pressure switch 510 are also provided. The active sensor 500 further includes a 32 KHz generator 512, a 25 Hz generator 514, a diagnostic time delay circuit 516, a switch debounce circuit 518, a diagnostic signal duration circuit 520, an inverter 522, a buffer 524, a storage tank 526 and a 178 Hz generator 528.

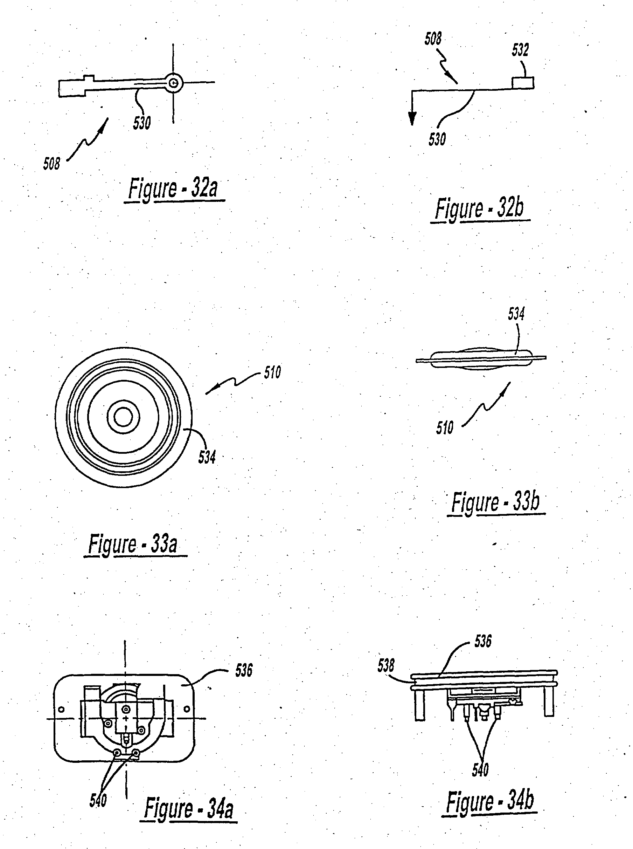

The roll switch 508 actuates or closes upon the vehicle traveling above a predetermined speed, such as 15 kilometers per hour, and is formed by way of a cantilevered beam 530, shown in Figures 32A and 32B. The cantilevered beam 530 includes a weight 532 attached to its distal end which adjusts the closing of the roll switch 508, depending on the speed of the vehicle. The pressure switch 510 is formed from a pair of circular shaped diaphragms 534 which are micro-plasma welding together about the outer circumference of the diaphragms 534, as shown clearly in Figures 33A and 33B. Upon decreasing to a predetermined pressure, such as 20 psi, each diaphragm 534 expands relative to one another to close the pressure switch 510. The inductor L1 in the LC circuit 502 is formed upon an inductor bobbin assembly 536, as shown in Figures 34A and 34B. The inductor bobbin assembly 536 receives an inductor coil within groove 538 with the ends of the coil secured to terminal pins 540. The coil is preferably formed from 30 gauge wire to create a 0.5 mH inductance. The types of components utilized for the remaining active sensor 500 is identified clearly in Figure 31.

In use, when the vehicle is stationary and assuming the vehicle tire pressure is above the predetermined value, both the roll switch 508 and the pressure switch 510 are open. In this condition, VCC or power is not supplied to any of the circuitry and no current is drawn from the power source 504. Once the vehicle is traveling above the predetermined speed, the roll switch 508 will close, thereby supplying power from the power source 504 to the logic circuit in the active sensor 500, via the power line VCC. Upon the roll switch 508 closing, the diagnostic time delay circuit 516 will provide a momentary high output ("1") at pin 3 of OR gate U1A, via resistors R1 and R2 with resistor R3 acting as a hold down resistor. Upon this momentary high output at pin 3 due to a high input at pins 1 and 2 of the OR gate U1A, capacitor C1 will begin charging, thereby lowering the logic input at pins 1 and 2 of OR gate U1A to below 3 volts or a low ("0") input, thereby rendering a low output ("0") at pin 3. Should the vehicle be operating in traffic or be in start and stop conditions, with the capacitor C1 fully charged, toggling of the roll switch 508 will inhibit further high outputs from the diagnostic time delay circuit 516 unless the roll switch remains opened for at least 44 minutes. In other words, resistors R1 and R2, along with capacitors C1 and C8 form a time constant T = RC of 44 minutes upon charging capacitor C1 and C8. Therefore, C1 and C8 will not discharge to enable a high output at pin 3 of OR gate U1A, unless the roll switch 508 remains open for more than 44 minutes to discharge the capacitor C1 and C8. The diagnostic time delay circuit thus acts to eliminate random or inadvertent diagnostic pulses.

With the momentary high output from the diagnostic time delay circuit 516, (i.e., pin 3 and U1A = "1") the diagnostic signal duration circuit 520 will provide a high output at pin 4 of OR gate U1B for about 3.3 seconds based upon the time constant formed by C3 and R5. In this regard, the high output from the diagnostic time delay circuit 516 passes from the switch debounce circuit 518 to provide a high input at pin 5 of OR gate U1B for a short momentary time period. This causes the output pin 4 to go high which then causes the input pin 6 to stay high for 3.3 seconds enabling the high output at pin 4 to be maintained for the 3.3 seconds. This high output is passed through inverter 522 formed by a NOR gate U2A creating a low output at pin 3 of NOR gate U2A. This low output is applied to both the 32 KHz generator 512 and the 25 Hz generator 514.

The low output from the invertor 522 starts the 32 KHz oscillator 512 to oscillate at about 32.768 KHz which is output at pin 4 of NOR gate U2B. This low output also causes the 25 Hz generator circuit 514 to provide a 25 Hz output at pin 11 of NOR gate U2D which is passed through buffer 524. The 32 KHz signal from the 32 KHz generator 512 and the 25 Hz signal from the 25 Hz generator 514 are both applied to the amplifier circuit 506. The 32 KHz signal is applied to pin 12 of OR gate U1D directly, while the 25 Hz signal is applied to pin 13 through the 178 Hz generator (5.6 ms) 528. With pin 12 or pin 13 of OR gate U1D high, output at pin 11 is high which maintains the transistor Q1 turned off, thereby inhibiting the resonator tank or LC circuit 502 from oscillating. As the 25 Hz signal is supplied through the buffer 524, pin 10 of OR gate U1C goes high and low every 0.04 seconds (25 Hz). When pin 10 initially goes low, there is a voltage differential across capacitor C7 which enables the transistor Q1 to turn off and on at the 32 KHz rate, via pin 12, thereby causing the LC circuit 502 to oscillate at 32 Khz. As the capacitor C7 charges for 5.6 ms, the transistor Q1 is then inhibited from oscillating at 32 KHz.

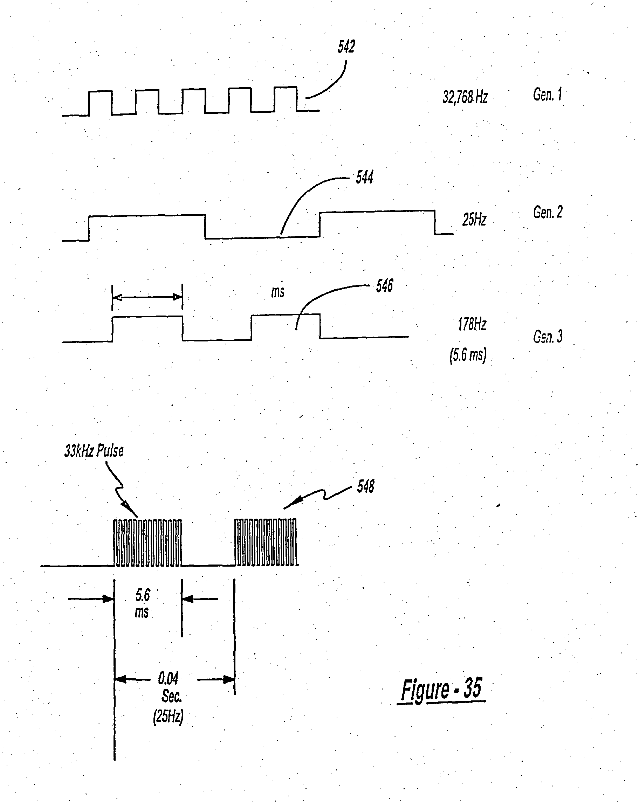

Referring to Figure 35, a 32 KHz signal 542 is shown, which is generated from the 32 KHz generator circuit 512. A 25 Hz signal 544 is shown, which is generated by the 25 Hz generator 514 and a 178 Hz signal (5.6 millisecond) 546 is shown, which is generated by the 178 Hz signal generator 528. The output signal generated by the LC circuit 502 is shown as waveform 548, which consists of the 32 KHz pulse 542 lasting for a duration of the 5.6 millisecond pulse 546 and occurring every 25 Hz. When in a diagnostic mode, this waveform 548 will last for approximately 3.3 seconds, via the diagnostic signal duration circuit 520. Should the tire pressure drop below a predetermined value and the pressure switch 510 close, the waveform 548 will be a continuous pulse and not limited by the diagnostic signal duration circuit 520 since. a high output will always be applied to pin 5 of the OR gate U1B. By providing both a diagnostic signal that lasts for about 3.3 seconds or an alarm signal having an indefinite duration, a user or driver of a vehicle is able to first confirm that the particular sensor 500 is operational and also determirie whether or not the particular tire 16 has dropped below a predetermined pressure. Also by providing the roll switch 508, battery power is conserved, thereby providing a sensor 500 that should have a usable life of about five (5) years of normal vehicle operation.

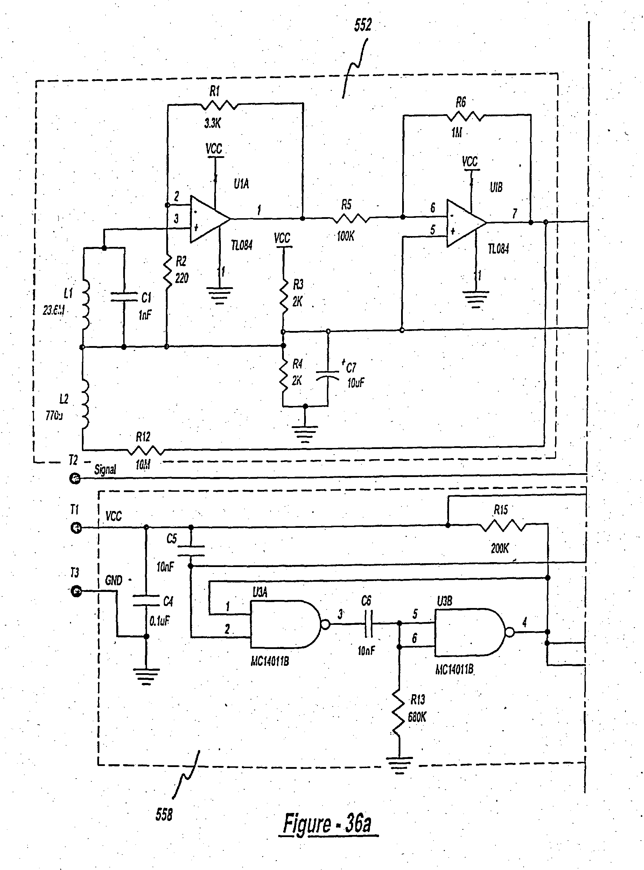

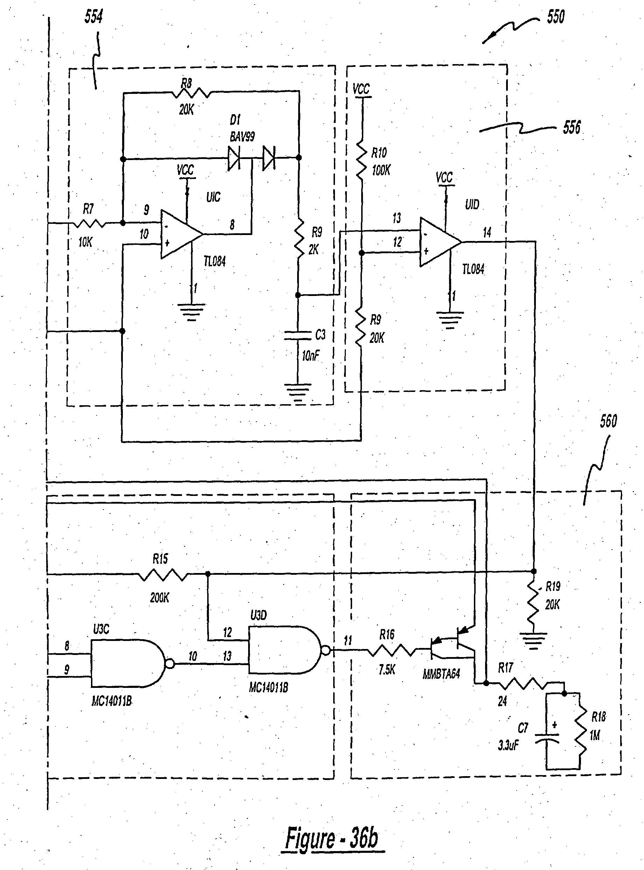

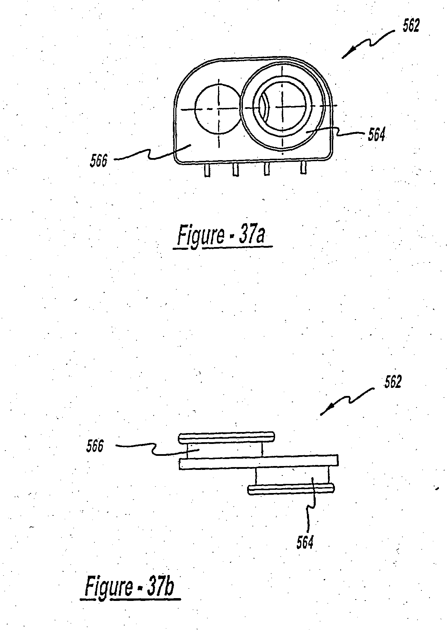

Referring now to Figures 36-38, a receiver 550 according to the teachings of the fourth preferred embodiment of the present invention is shown in detail. The receiver 550 includes a two-stage amplifier circuit 552, a high to low frequency converter circuit 554, a comparator circuit 556, a bandpass filter logic 558 and an AC to DC converter 560. The two-stage amplifier circuit 552 operates similar to the previously discussed receivers and includes the pair of inductors L1 and L2. The inductor L1 and L2 are formed on a receiver bobbin assembly 562, as shown in Figures 37A and 37B. In this regard, coil L1 is turned about a first bobbin 564 to create an inductance of about 23.6 mH and coil L2 is formed about bobbin 566 to create an inductance of about 0.8 mH. The placement or positioning of the inductor L1 relative to L2 by way of the bobbin assembly 562 creates a feedback of substantially zero or negative in the two-stage op-amp circuit 552 when the sensor 500 is not positioned in operative proximity to the receiver 550. In other words, the receiver 550 would be in a stable non-oscillating mode.

The two-stage amplifier circuit 552 includes a first op-amp U1A in electrical communication with a second op-amp U1B. Resistors R1 and R2 create a gain of 15 for the first op-amp U1A and resistors R5 and R6 create a gain of 10 for the second op-amp U1B. Resistors R1, R2, R5 and R6 also determine the feedback sensitivity of the two-stage amplifier circuit 552, as well as also form the feedback path for the two-stage amplifier circuit 552. The receiver coil L1 and capacitor C1 form an input resonant tank and receiver coil L2 is connected to the output of the second op-amp U1B.

When the active sensor 500 is positioned in operative proximity to the receiver 550 and is operational by way of either the diagnostic pulse from the roll switch 508 or the alarm pulse from the pressure switch 510, the composite signal 548 is amplified and passed through the output of the two-stage amplifier 552. Here again, the inductor L1 and L2 are positioned relative to one another so that feedback in the two-stage amplifier circuit 552 is either zero or a negative value when the sensor 500 is not in operative proximity to the receiver 550. Alternatively, when the sensor 500 is positioned in operative proximity to the receiver 550 and is also on, this feedback goes to a positive value as with the other receivers discussed herein.

The 32 KHz signal which has a duration of 5.6 milliseconds and oscillating at 25 Hz, as shown by waveform 548, is then applied to the high frequency to low frequency converter circuit 554. The high to low frequency converter circuit 554 includes a gain of two and rectifies and filters the 32 KHz pulse into a 5.6 millisecond duration pulse occurring every 25 Hz by way of the rectifier diodes D1 and RC filtering R9 and C3. In other words, the waveform 548 is rectified to remove the high frequency (i.e., 32 KHz) component to simply provide 5.6 millisecond duration pulses occurring every 25 Hz. This lower frequency signal is then applied to the comparator circuit 556. The comparator circuit 556 is formed by op-amp U1D which receives a voltage of about 9 volts and input pin 12, via voltage divider R10 and R11. When the inverting input pin 13 is less than about 9 volts, output at pin 14 is high. Alternatively, when the input at the inverting pin 13 is greater than that at pin 12, the output of the op-amp U1D at pin 14 goes low. In other words, the output of the op-amp U1D will go low for about 5.6 milliseconds every 0.04 seconds or 25 Hz for a duration of 3.3 seconds if it receives a diagnostic signal or indefinite if it receives an alarm signal.

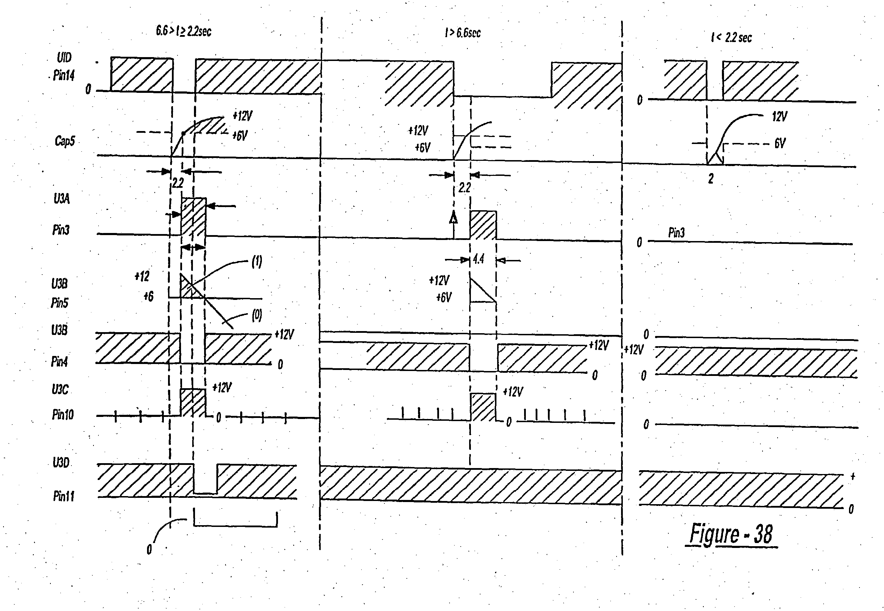

This low frequency oscillating output from the comparator circuit 556 is then applied to the bandpass filter 558. With reference to Figure 38, the bandpass filter 558 filters out or eliminates pulses having a duration of less than about 2.2 seconds or greater than about 6.6 seconds. In this regard, column 1 of Figure 38 shows the operation of the bandpass filter 558 when the duration of the pulse from the comparator circuit 556 is between about 2.2 to 6.6 seconds, column 2 shows the operation when the output is greater than 6.6 seconds and column 3 shows the operation when the pulse from the comparator circuit 556 is less than 2.2 seconds. The first row of Figure 38 shows the output from the comparator circuit 556 or pin 14 of the op-amp U1D. The second row shows the charging of the capacitor C5 in the bandpass filter 558. Row 3 shows the output of pin 3 of the NAND gate U3A. Row 4 shows the input to pin 5 of the NAND gate U3B. Row 6 shows the output at pin 4 of the NAND gate U3B. Row 5 shows the output at pin 10 of the NAND gate U3C. Row 7 shows the output at pin 11 of the NAND gate U3D which is the output of the bandpass filter 558.

Upon review of Figure 38, it can be observed that should the output from the comparator circuit 556 be low for between 2.2 to 6.6 seconds, the bandpass filter 558 will provide a momentary low output. Otherwise, should the duration be less than 2.2 seconds which may occur from spikes generated in the automotive environment or greater than 6.6 seconds which could indicate improper operation of the sensor, the output of the bandpass filter 558 remains high (see Row 7). Thus, the bandpass filter will only pass a signal having a specific signature (i.e., 5.6 ms pulses occurring at 25 Hz).

When the output of the bandpass filter 558 goes low, the transistor Q1 in the AC to DC converter 560 turns on to provide a high DC output signal at output T2 due to the filtering of resistors R17 and R18, along with capacitor C7. The duration of this DC output will vary depending on whether the sensor 500 is forwarding a diagnostic signal or an alarm signal. In this regard, should a diagnostic signal be forwarded by the sensor 500, the DC output from the receiver 550 will have a duration of about 6.6 seconds which is controlled by both the diagnostic signal duration circuit 520 and the AC to DC converter 560. Otherwise, the DC output from the receiver 560 at output T2 will remain indefinite identifying an alarm signal. The receiver 550 can thus eliminate spurious signals which may be generated by noise in the automotive environment resulting in short duration spikes or pulses and may also eliminate pulses not meeting the signature waveform, as shown as waveform 548 without the 32 KHz pulse. This type of logic filtering is very useful in the automotive environment because the automotive environment generally will receive various spikes in various systems, as well as other oscillating type pulses. Thus, the receiver 550 only provides the desired output when it receives the pulse having a particular signature (i.e., waveform 548).

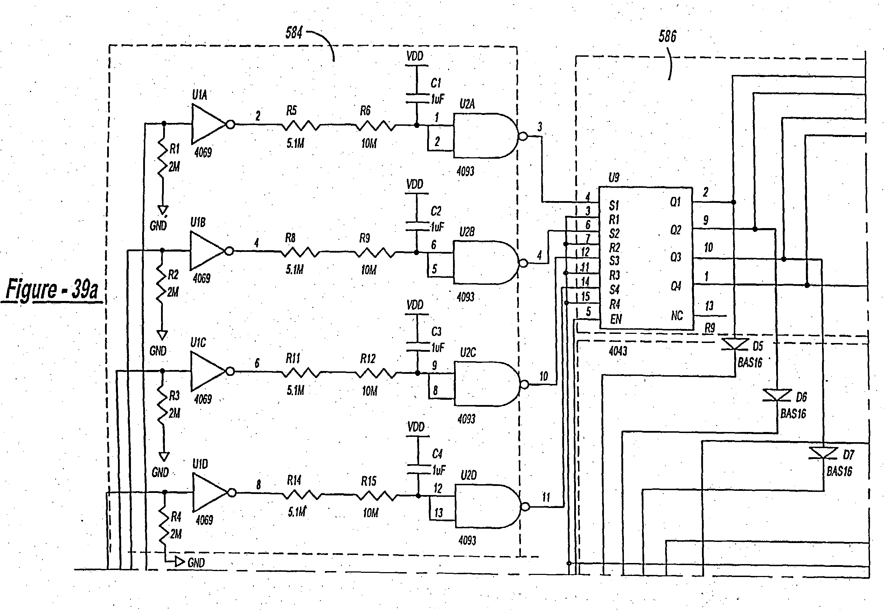

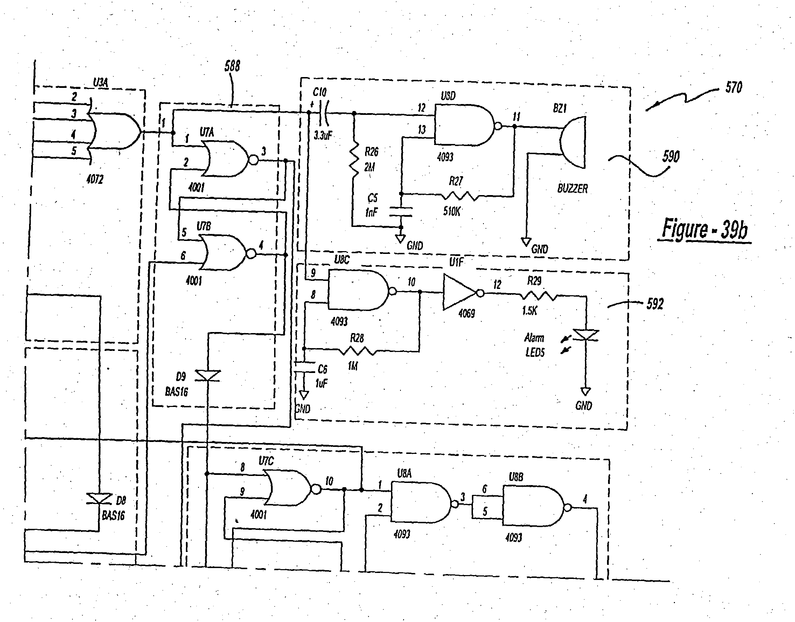

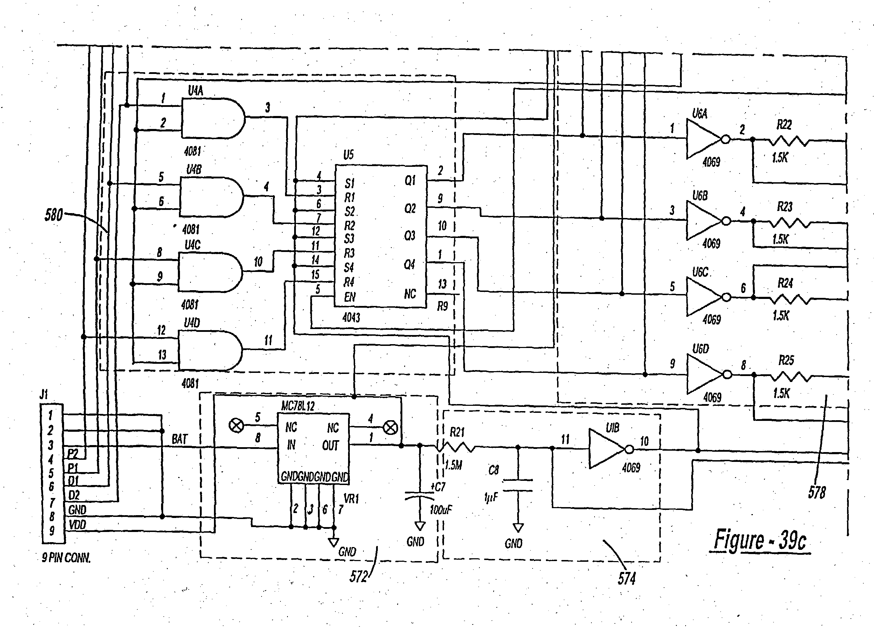

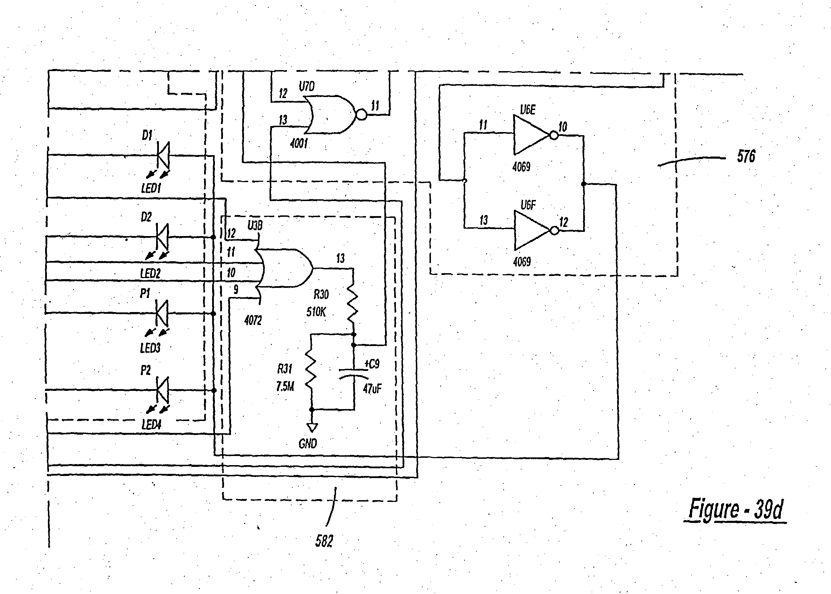

Referring now to Figure 39, a warning indicator circuit 570 according to the teachings of the fourth preferred embodiment of the present invention is shown. The warning indicator circuit 570 includes a power regulator 572, a reset circuit 574, an LED power switch 576, a tire indicator circuit 578, a diagnostic indicator circuit 580, a diagnostic delay circuit 582, an alarm buffer time delay circuit 584, an alarm trigger circuit 586, a diagnostic disable circuit 588, an audible alarm generator 590 and a visual alarm generator 592. Upon initially applying power to the warning indicator circuit 570, the power regulator 572 receives battery voltage and provides a regulated VDD voltage of about 6 volts to power the various circuits within the warning indicator circuit 570. The power regulator 572 also supplies a regulated power to the receiver circuit 550, via pin 1 of the nine (9) pin connector J1. Inputs from four (4) receivers 550 are received at pins 3-6 of the J1 connector which includes driver 1 (front), driver 2 (rear), passenger 1 (front) and passenger 2 (rear). These inputs will either be a momentary DC pulse of less than about 15 seconds for a diagnostic pulse (i.e. 3.3 seconds) or a substantially continuous DC pulse identifying an actual alarm signal from the particular receiver. With power initially supplied from the power regulator 572, the reset circuit 574 provides a momentary 1.5 second high output pulse from pin 10 of inverter U1E which both resets the U5 flip-flop in the diagnostic indicator circuit 580, as well as switches the LED power switch circuit 576 to provide a momentary high to the cathode side of LEDs 1-4 of the tire indicator circuit 578. This results in a momentary 1.5 second illumination of LEDs 1-4 upon power up to provide an indication that the warning indicator circuit 570 is operating properly.

Once the LEDs 1-4 have been illuminated for 1.5 seconds, the warning indicator circuit 570 awaits a diagnostic pulse from each receiver 550 at inputs 3-6 of connector J1. Each diagnostic pulse from each receiver 550 is applied to a corresponding AND gate U4A-D in the diagnostic indicator circuit 580. For example, assuming the driver 1 input receives a diagnostic signal, AND gate U4A resets the flip-flop U5 to provide a low output at Q1 of flip-flop U5. This provides a high input on the anode side of LED 1 assuring that LED 1 will not turn on, further discussed herein. This high output is also applied to the diagnostic delay circuit 582 which starts a twenty second timer formed by R31 and C9. In this regard, it is assumed that the diagnostic pulse from all receivers 550 should be received within twenty seconds upon a first diagnostic signal being received. When the timer in the diagnostic delay circuit 582 times out at twenty seconds, a high input is provided to the NOR gate U7C of the LED power switch circuit 576 which disables the U5 flip-flop in the diagnostic indicator circuit 580, as well as applies power to the cathodes of the LEDs. In this way, should any of the LEDs 1-4 have a low at its anode due to not receiving a diagnostic signal though AND gates U1A-D, thereby not changing the output latch of the U5 flip-flop, that particular LED 1-4 will be illuminated to indicate that there may be a problem with the particular sensor 500 or receiver 550.

Assuming now that an alarm signal is being forwarded by driver 1 receiver 550, this signal is applied to the alarm buffer time delay circuit 584. The alarm buffer time delay circuit provides a time constant of fifteen seconds formed by C1, R5 and R6, such that if the signal applied to the alarm buffer time delay circuit 584 is less than fifteen seconds in duration, there will be no corresponding signal output applied to the alarm trigger circuit 586. For example, assuming a signal duration of greater than fifteen seconds is supplied from the driver 1 receiver 550, a high output from NAND gate U2A is applied to the flip-flop U9, thereby providing a latched high output Q1. This latched high output is applied to an OR gate U3A which provide a high output from the alarm trigger circuit 586 that is applied to both the diagnostic enable/disable circuit 588, as well as the audible alarm generator 590 and visual alarm generator 592. In this regard, the diagnostic enable/disable circuit 588 disables the U5 flip-flop in the diagnostic indicator circuit 580, while a high input is applied to the audible alarm generator 590 and the visual alarm generator 592.

The audible alarm generator 590 will create an audible alarm, via the buzzer BZ1 for about 6.6 seconds formed by the timing circuit C10 and R26. This high input is also applied to the visual alarm circuit 592 which causes the LED 5 to oscillate for .5 seconds on and .5 seconds off continuously during the receipt of the alarm signal. In order to identify the particular tire 16 that the alarm is associated with, the latched output from the flip-flop U9 is also applied to diode D5 in the tire indicator circuit 578 which enables the LED 1 to illuminate identifying that the alarm is coming from the D1 receiver or driver front tire.

In summary, upon initial power up, each LED 1-4 is illuminated for 1.5 seconds, via the reset circuit 574. Upon receipt of a diagnostic signal from any one of the four receivers 550, a diagnostic delay of twenty seconds from the diagnostic delay circuit 582 is initiated for receipt of all four diagnostic signals. Once twenty seconds has lapsed, any LEDs 1-4 in which a diagnostic signal was not received will illuminate. Should a signal have a duration of greater than fifteen seconds, this signal will pass through the alarm buffer timer delay circuit 584 to trigger both a momentary audible alarm and a continuous visual blinking alarm, via LED 5. Additionally, a particular LED 1-4 will also illuminate identifying which sensor 500 or receiver 550 there may be potential problems with.

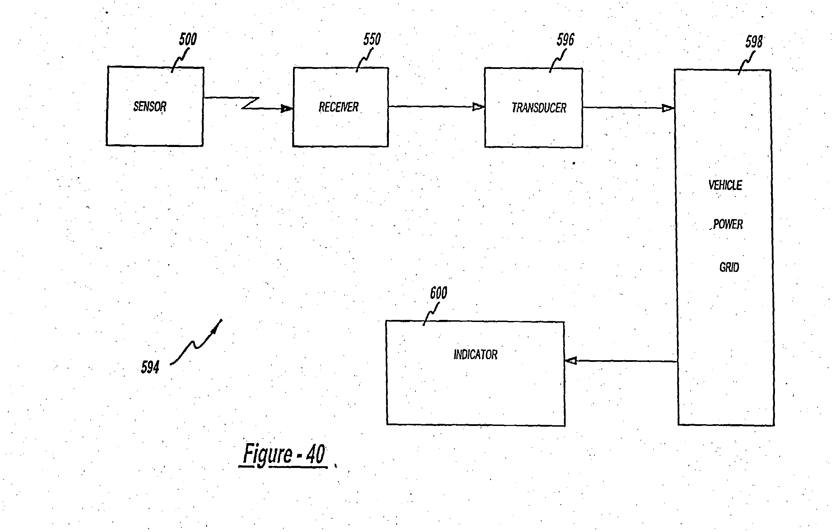

Turning now to Figures 40-42, a tire pressure monitoring system (TPMS) 594 according to the teachings of a fifth preferred embodiment in the present invention is shown. The TPMS 594 includes the active sensor 500 or one of the passive sensors disclosed herein to sense whether the particular tire pressure is out of a predetermined range. The sensor 500 electromagnetically transfers this information to the receiver 550 or any other receiver disclosed herein for processing. The receiver 550 instead of being physically hard wired to an indicator circuit now transfers this information to a transducer 596. The transducer 596 transfers the information delivered by the receiver 550 by imposing a 40 KHz signal onto the vehicle power grid 598. In this regard, the vehicle power grid 598 consists of either the ignition or battery power lines routed throughout the vehicle. The modulated 40 KHz signal is coupled to the power grid 598 by way of electromagnetic coupling, via a primary and secondary transformer configuration, further discussed herein. This modulated 40 KHz signal is then received by an warning indicator circuit 600 which includes an acoustic speaker/microphone to receive the modulated 40 KHz signal from the power grid 598. The transformer 596 will be hard wired to two of the four receivers and, there will, therefore, be two transducers 596 in the tire pressure monitoring system 594 each operating at a same frequency.

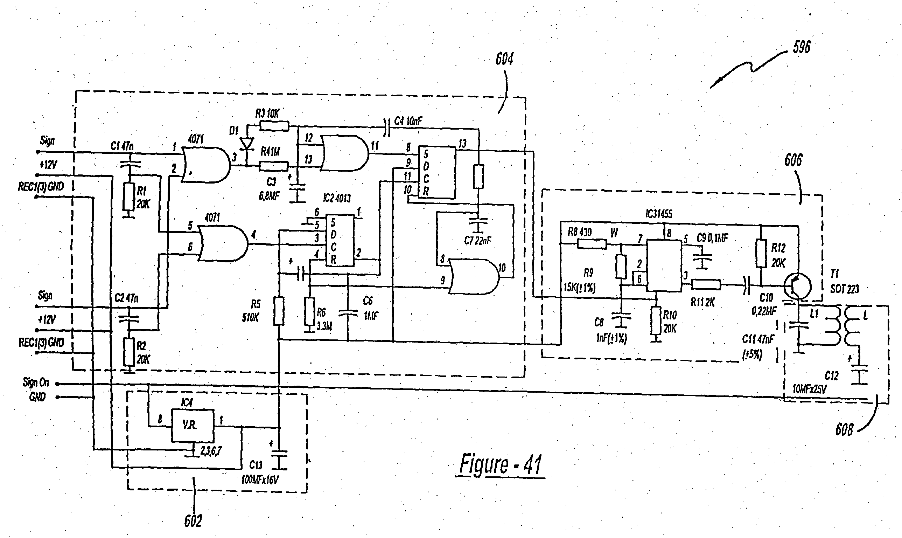

Referring to Figure 41, a detailed schematic block diagram of the transducer 596, according to the teachings of the fifth preferred embodiment of the present invention is shown. The transducer 596 includes a power supply 602, a diagnostic timing logic circuit 604, a 40 KHz generator 606 and a coupling transformer 608. The power supply 602 supplies power to the transducer circuit 596 upon receiving an ignition signal. The diagnostic/timing logic circuit 604 is coupled to the pairs of receivers 550 which are either generally the driver side receivers or the passenger side receivers. Should the diagnostic/timing circuit 604 receive a diagnostic signal from both receivers 550 for the specified diagnostic time period, it is then assumed that the two receivers 550, along with the corresponding sensors 500 are operating properly and no signal is forwarded by the transducer circuit 596. Should the diagnostic/timing logic circuit 604 receive a diagnostic pulse from only one receiver 550, then a diagnostic pulse will be forwarded by the transducer circuit 596 further discussed herein. Should a substantially continuous signal be received from either receiver 550, this signal is assumed to be an alarm so that the transducer 596 will subsequently transmit an alarm signal.

In this regard, the 40 KHz generator 606 drives the primary winding of the coupling transformer 608 which is electromagnetically coupled to the secondary winding that is tied to the vehicle ignition or power grid 598. Should a diagnostic pulse be forwarded from the diagnostic/timing logic circuit 604, the 40 KHz generator 606 is driven for five seconds to create a 40 KHz pulse having a five second duration which is coupled to the vehicle power grid or vehicle ignition 598, via the secondary inductor in the coupling transformer 608. Should an alarm signal be passed from the diagnostic/timing logic circuit 604, then a continuous 40 KHz signal is applied to the vehicle power grid 598.

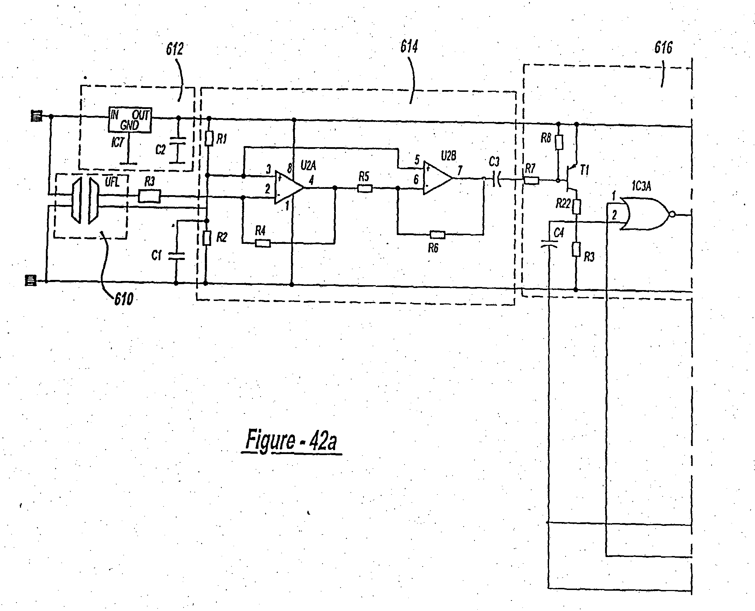

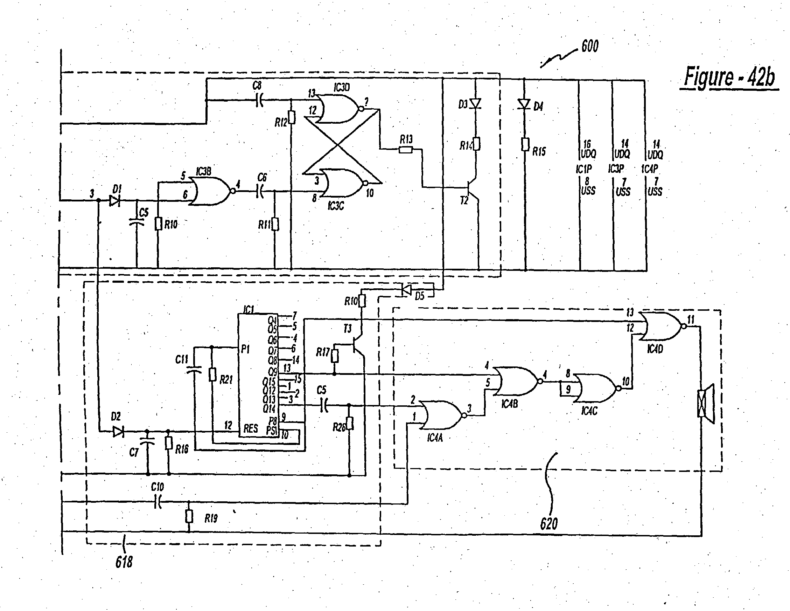

Turning finally to Figure 42, the warning indicator circuit 600 according to the teachings of the fifth preferred embodiment in the present invention is shown in further detail. The indicator 600 includes an ultrasonic acoustic transducer 610 formed by an acoustic speaker and microphone, a power supply 612, a two stage amplifier circuit 614, a diagnostic logic circuit 616, an alarm logic circuit 618, and an audible generator 620. Upon power up of the indicator circuit 600, the power supply 612 provides power to the power indicator formed by LED diode D4 which illuminates upon receiving this power. Should a diagnostic signal consisting of a 40 KHz signal having a duration of five seconds be transferred onto the vehicle power grid 598, the ultra-acoustic transducer 610 formed by the 40 KHz speaker will receive this signal from the ignition and transfer it to the microphone thereby electrically isolating this signal from any other spurious noise on the ignition line. In this way, the ultra-acoustic transducer 610 acts a very tight bandwidth filter to only accept the 40 KHz signal. This signal is then amplified in the two-stage amplifier circuit 614 and passed to the digital logic circuit 616. The digital logic circuit 616 determines if the pulse has a five second duration and illuminates the diagnostic LED diode D3. Should an alarm signal be forwarded on the vehicle power grid 598, here again, this is passed through the ultra-acoustic transducer 610, and forwarded to the two-stage amplifier 614 and applied to the alarm logic circuit 618. The alarm logic circuit 618 will then pulse alarm LED formed by diode D1, via the counter IC1. Additionally, the counter IC1 will signal the audible generator 620 to momentarily provide an audible alarm, via buzzer B1. This type of tire pressure monitoring system 594 eliminates the need to hard wire the receiver 550 relative to the indicator 600, thereby providing further versatility for aftermarket configurations, as well as ease of assembly and further noise immunity.

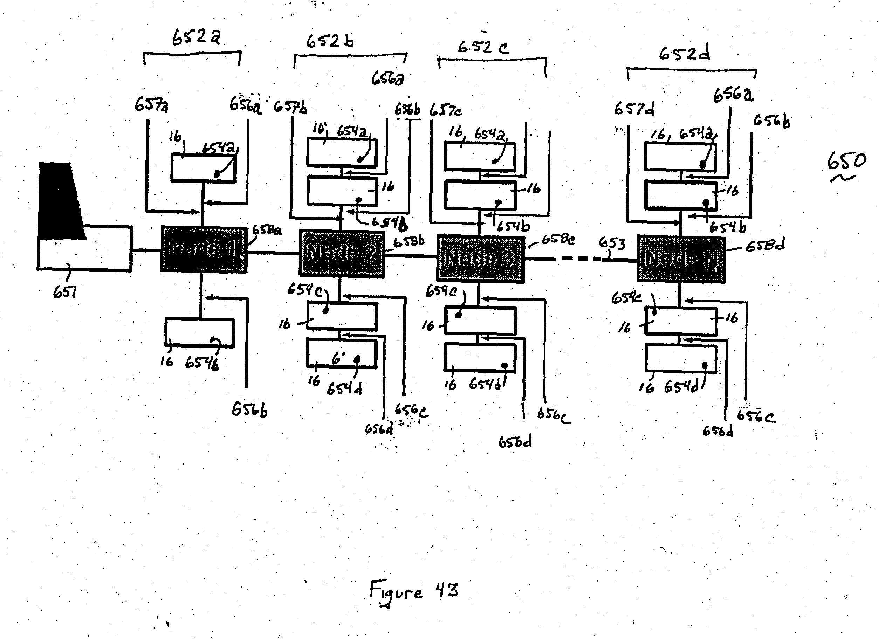

Referring to Figure 43, a tire pressure monitoring system (TPMS) according to a fifth embodiment of the invention is shown generally at 650 installed adjacent the drive train of a motor vehicle. The TPMS 650 is operable to accurately identify pressure levels within a tire 16 by use of a sensor transducer 654 installed within the tire 16. The TPMS 650 consists of an indicator 651 and at least one of a plurality of subcircuits 652a-d. Each subcircuit 652a-d is formed by sensor transducers 654a-d, corresponding receivers 656a-d, and nodes 658a-d. The subcircuits 652a-d are mounted adjacent to the separate axles 657a-d of the drive train. Generally, the active sensors 654a-d are operable to communicate to the receivers 656a-d both diagnostic and alarm signals for conditions such as air tire pressure and temperature. The receivers 656a-d are configured to receive, condition, and transmit both the alarm and diagnostic signals received from the sensor transducers 654a-d to a corresponding node 658a-d, which communicate to the indicator 651 via a common communication bus 653. The indicator 651 displays the information sent from the sensor transducers 654a-d to the driver of the vehicle either audibly, visually, or both. Generally, the diagnostic and alarm signals produced by the sensor transducers 654a-d have the same pulse signature or footprint. The diagnostic signal is, however, transmitted for a shorter duration than the alarm signal.

The receivers 656a-d, which are configured to receive the diagnostic and alarm signals from the sensor transducers 654a-d, are mounted several centimeters away from the inner edge of the corresponding tires 16. In addition to transmitting the alarm and diagnostic signals to the nodes 658a-d, the receivers 656a-d are configured to transmit an initialization signal to their corresponding nodes 658a-d. This initialization signal communicates to the nodes 658a-d the number of receivers 656a-d functioning on a specific axle, thus allowing the nodes 658a-d to properly assess the functionality of the sensors 654a-d. The nodes 658a-d provide a configurable mechanism for expanding a sensing system to cover an infinite number of vehicle types and configurations. For example, the TPMS 650 may be used on any type of vehicle, including vans, trucks, semi-trucks, and trailers, etc. Each subcircuit 652a-d is capable of use alone or in conjunction with other subcircuits 652a-d as well as with the indicator 651. This allows the use of the TPMS 650 in vehicles having as few as one sensed axle 657a as well as sensing tire pressures in multi-axle 657a-d vehicles. Additionally, the TPMS 650 can be added to an axle of a towed trailer. Each node 658a-d within the subcircuits 652a-d communicate with other nodes 658a-d and the indicator 651, via a common communications bus 653.

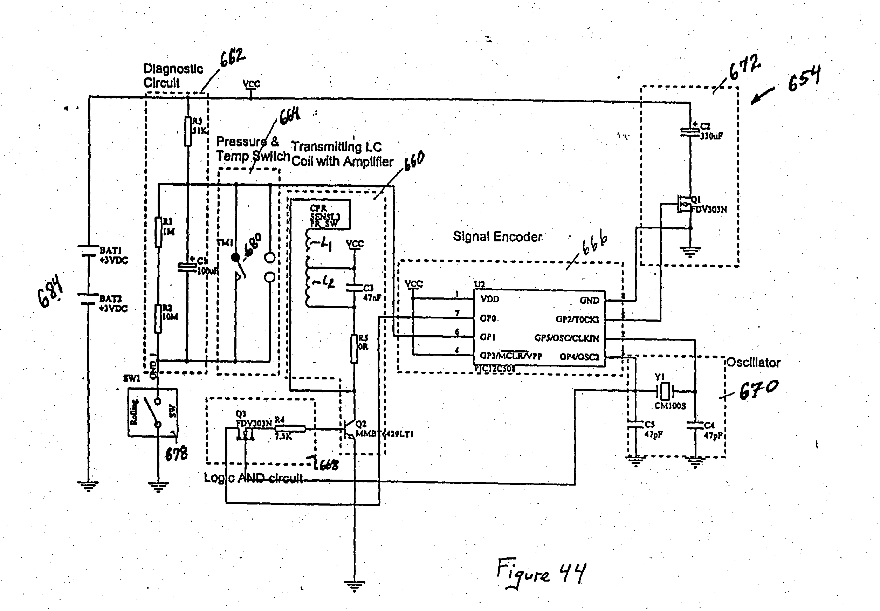

Referring to Figure 44, one of the active sensors 654 is further detailed. Typically, the active sensor 654 is placed within the vehicle tire 16 and may be positioned in a range of about 10 centimeters to about 100 centimeters relative, to the receiver 656. The active sensor 654 enables the use of a single inductor (L) in the corresponding receivers 656a-d (discussed further herein).

Included in the active sensor 654 is an LC circuit 660, a diagnostic circuit 662, a pressure and temperature switch 664, a signal encoder 666, a logic AND circuit 668, an oscillator 670, and an energy tank 672. The LC circuit 660 is formed by inductors L1, L2, and capacitor C3. Inductor L1 is a 12 turn booster coil which increases in the detectable range of the receivers 656a-d, while L2 is a 5.05 mH inductor. Transistor Q2 functions to regulate power to the LC circuit 660 as further described below so that the LC circuit 660 may resonate at a frequency controlled by the LC time constant.

In use, when the vehicle is stationary and assuming the vehicle tire pressure is above a predetermined value, both the roll switch SW1 and the pressure transducer switch 680 are open. In this condition, VCC or power from battery 1 and battery 2 or power source 684 is applied to pin 6 of the signal encoder 666. This places the signal encoder 666 into a low power consuming sleep mode or state. When the vehicle reaches a velocity above a predetermined level, rolling switch SW1 678 closes allowing capacitor C1 of the diagnostic circuit 662 to charge. The diagnostic circuit 662 is formed by resistors R1 and R2, which are in parallel with capacitor C1 and resistor R3. As capacitor C1 charges, pin 6 of encoder 666 is brought low, thus initiating the encoder 666 to produce a series of pulses out of pin 7 into the LC circuit 660, via the logic AND circuit 668. This brings encoder 666 out of the non-active sleep state into an active state. Because capacitor C1 will charge more quickly than it will discharge through R1 and R2, pin 6 of encoder 666 will be quickly brought high again, thus stopping the production of the signals to the LC circuit 660 through pin 7. The length of time the active sensor 654 produces a diagnostic signal is dictated by the time needed to charge capacitor C1 and can be approximately 10 seconds.

The values of the RC circuit in the diagnostic circuit 662 allows for a discharge time for capacitor C1 of about 20 minutes. In the event the vehicle stops for a short time period, C1 begins to discharge. Should the vehicle begin to move prior to the expiration of a 20 minute discharge period, rolling switch SW1 again closes and allows C1 to recharge without bringing pin 6 of the signal encoder 666 low. In this way, the vehicle can start and stop without sending a diagnostic signal throughout the system to provide a built-in hysteresis. Should the vehicle remain motionless for greater than about 20 minutes, the active sensor 654 will provide another diagnostic signal upon rotation of the vehicle tires caused by the subsequent recharging of capacitor C1.

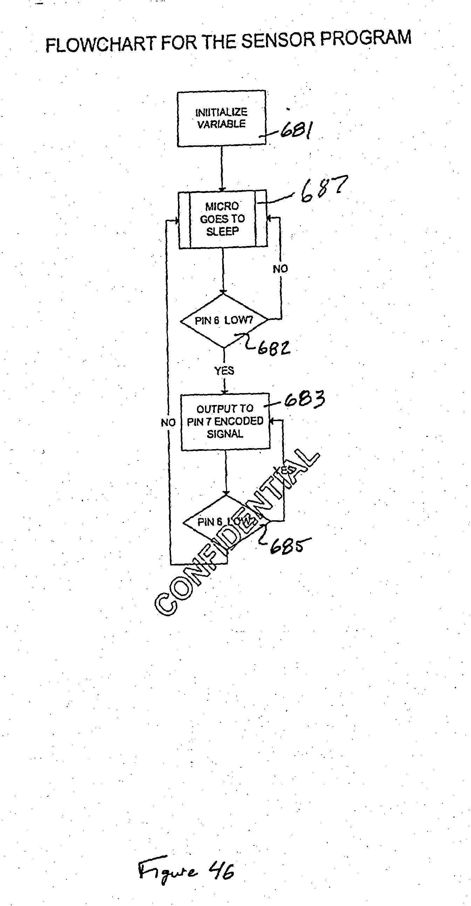

The functioning of the signal encoder 666 is best shown in Figure 46. Prior to installation of the encoder 666 into the vehicle, the encoder 666 is initialized in process block 681. As previously mentioned, signal encoder 666 will place itself into sleep mode 687 as a function of the state of pin 6. In query block 682, the encoder 666 will periodically poll pin 6 to determine if it is low. If pin 6 remains high, the encoder 666 will continue to remain in the sleep mode 687. If query block 682 determines pin 6 is low, caused by either the diagnostic circuit 662 or pressure switch 664, the signal encoder 666 outputs a series of pulses through pin 7 in process block 683. In query block 685, the encoder 666 queries whether pin 6 is still low. Should a low pressure situation be present, pin 6 will be held low continually. The signal encoder 666 is programmed such that if pin 6 is low due to the closing of switch 680 or the pressure switch 664 and rolling switch SW1 678 the signal will be sent immediately. The signal encoder 666 outputs a signal through pin 7 for 35 seconds. The node must receive the signal for 16 or more seconds before transmitting an alarm. To conserve battery energy, the signal encoder 666 will then wait three minutes prior to sending another alarm signal. In this way, should an alarm be triggered from a low tire pressure or high temperature, the alarm will be provided for 35 seconds every 3 minutes. If the vehicle stops for any length of time, the alarm signal will continue again when the vehicle moves. This ensures the battery is not used unless the vehicle is moving.

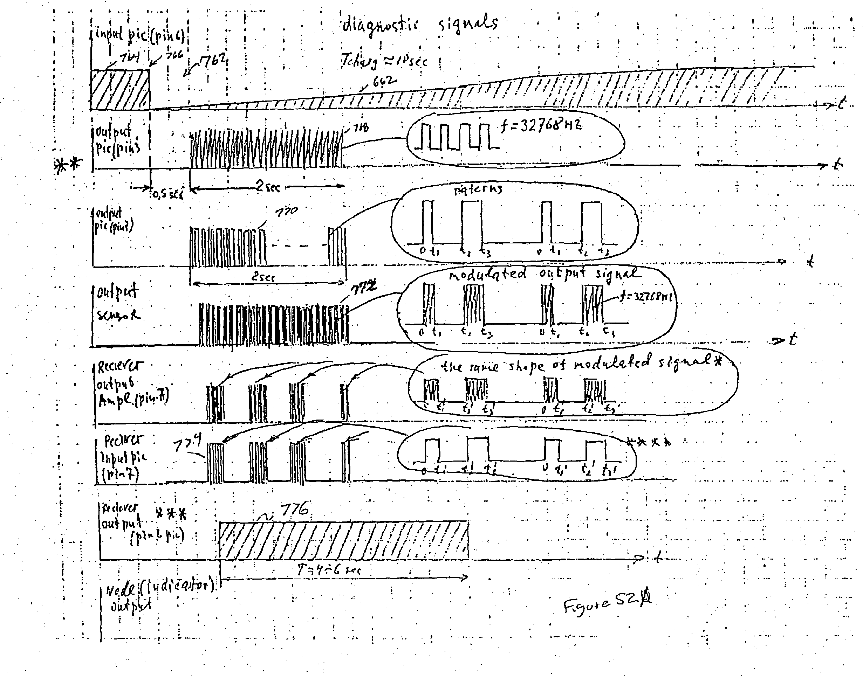

Referring briefly to Figure 44, the energy tank 672 functions to ensure the batteries 684 can provide the needed current for the short bursts caused by signal encoder 666. Q3 of the logic AND circuit 668 combine the high frequency component from the oscillator 670 with the signal component from the encoder 666 to form the signal as best seen in Figure 51. This is the signal that is retrievable by the receiver 656a.

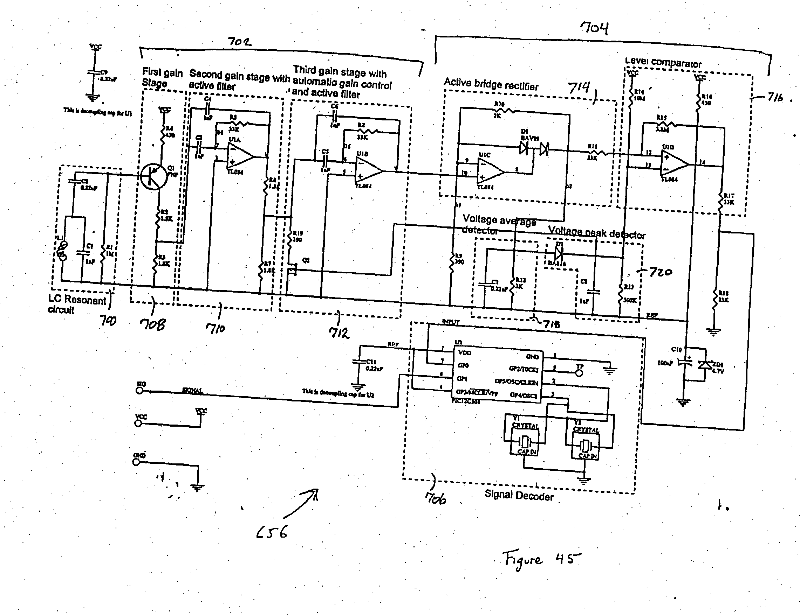

Figure 45 is an electrical schematic diagram of the receiver 656a shown in Figure 43. The receiver 656a is operable to receive and encode the signals from the active sensor 654a. The receiver 656a then determines if the active sensor 654a is operating and if it is transmitting a low pressure alarm signal. As previously mentioned, the active sensor 654a will produce a predetermined series of pulses. When the receiver 656 receives these pulses for a short time, the receiver 656 uses the pulses as a diagnostic signal to determine that the active sensor 654 is functioning properly. Should the receiver 656a receive the pulses from the active sensor 654 for greater than 16 seconds, the receiver 656a determines that it has received an alarm signal.

The receiver 656a includes a L1C1 resonant frequency receiver 700, a signal amplifier and filter 702, a signal conditioner 704, and a signal decoder 706. The signal amplifier and filter 702 has a first gain stage 708, a second gain stage with active filter 710, and a third gain stage 712 with automatic gain control and active filter.

The LC resonant frequency receiver 700 is comprised of a first inductor L1 having an inductance of about 23mH. In conjunction with C1, and C2, L1 of the LC resonant receiver 700 receives a signal from the active sensor 660, which is transferred to the base of PNP transistor Q1 of the first gain stage 708. This signal is done through electromagnetic coupling of the sensor 654 with the receiver 656.

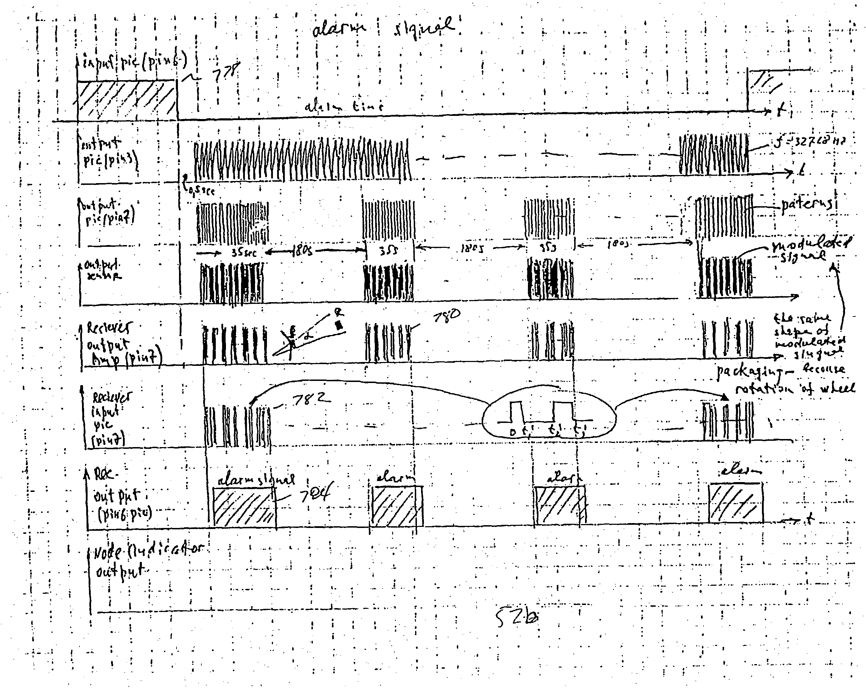

The received signal shown in Figure 52 is amplified with a gain of 4 or 5, and transferred to the second gain stage with active filter 710, where the signal is amplified by operational amplifier U1A. The gain of the second gain stage 710 controlled by U1B is again 4 or 5, as regulated by the values of C3, C4, and R5.

After amplification in the second gain stage 710, the signal is transferred to the third stage amplifier 712. The third stage amplifier 710 has an automatic gain control feature which is regulated by Q2. This regulation is described in more detail below.

After amplification, the signal (see Figure 52b) is conditioned by signal conditioner 704. The signal conditioner 704 comprises an active bridge rectifier 714, a level comparator 716, a voltage average detector 718, and a voltage peak detector 720. The active bridge rectifier 714 is a one-half wave rectifier as is known in the art.

The remaining portions of the signal conditioner 704 function to adjust the level of the signal to accommodate fluctuations of the signal caused by rotation of the sensors 654a-d on the wheel. In doing so, the voltage average detector 718 and voltage peak detector 720 provide signals to transistor Q2 of the third gain stage 712 and the level comparator 716 to regulate the level of the incoming signal. Q2 of the third gain stage 712 is configured so that when the value of the signal from the voltage peak detector 720 is low, R19 of the third gain stage 712 is not in use. Should the output of peak voltage detector 720 reach a predetermined value, R19 is opened to ground and functions as a divider to control the gain of the third stage 712. This regulated signal is then provided to pin 7 of the signal decoder 706.

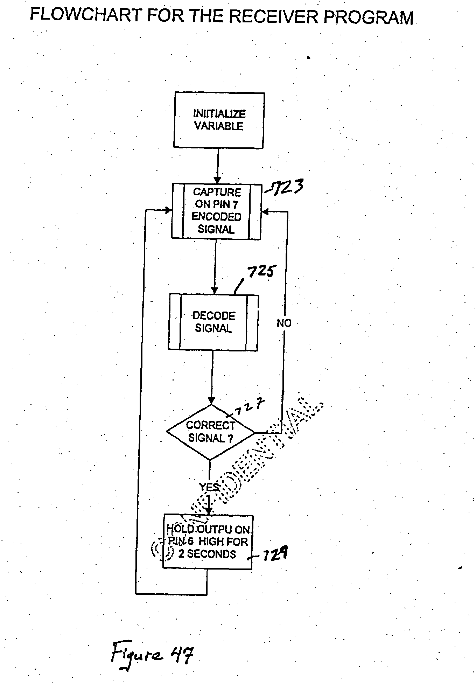

Figure 47 is a flow chart depicting the function of the receiver 656a of Figure 45. The signal decoder 706 functions to analyze the signals from active sensor 654a to determine if a proper diagnostic signal has been made and if the active sensor 654a is transmitting an alarm signal. The receiver's encoder 706 is operable to monitor the incoming signal (process block 723) and to determine whether a proper signal is coming from the sensor 754a (process block 725). In particular, the signal decoder 706 is monitoring the input signal to determine if a plurality of square waves (see Figure 51) occur having a specific duration and that those square waves have a predetermined interval therebetween (i.e. footprint). Should the signal decoder 706 detect such an occurrence, the state of pin 6 changes (process block 729).

As previously described, when initiated the diagnostic circuit 662 of the active sensor 654 transmits a pair of spaced apart signals corresponding to a "functioning" sensor. This diagnostic signal is transmitted through the receiver 656a to the signal decoder 706, which converts it to a signal on pin 6. After a predetermined amount of time equal to the time to charge C1 of the sensor diagnostic circuit 662, the signal on pin 6 is removed. This removal is detected by the node 658.

When the active sensor 654 is transmitting an alarm signal, pin 6 of the signal decoder 706 is held high for a predetermined amount of time longer than the amount of time indicated by the diagnostic signal. The node 658a receives this signal and operates to send an alarm to the indicator 651.

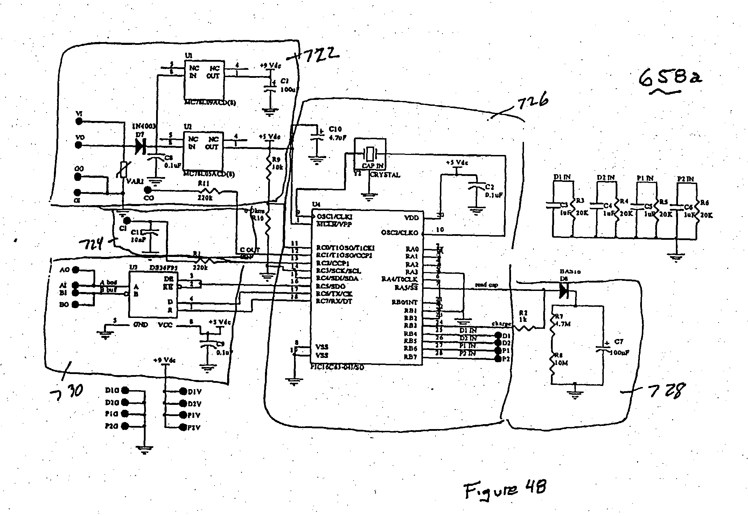

Figure 48 is a schematic representation of the node 658a. The node 658a is capable of accepting multiple inputs from multiple receivers 656a associated with a given axial 657a. Furthermore the node 658a is configured to communicate with other nodes 658b-d or the indicator 651 via the common communications bus 653 to transfer information from the active sensor 654.

The node 658a is formed of a voltage supply and protection circuit 722, a configuration phase circuit 724, a node microprocessor 726 with register storage, a capacitor charge network 728, a bus and communication circuit 730 and an input RC filter 733 in each input line. The voltage supply and protection circuit 722 uses standard voltage regulators U1 and U2 to supply the needed voltage requirements.

Configuration phase circuit 724 allows the nodes 658a-d to determine the number of nodes 658a-d in the system. Upon initialization, the node microprocessor 726a of the first node 658a in the system initiates a single pulse out of pin 12. The next node microprocessor 726b of second node 658b detects the single pulse into input pin 13. The node microprocessor 726 then adds another pulse and outputs two pulses out pin 12. This process continues down the chain of nodes 658a-d.

Upon startup of the systems, the receivers 656a-d send a burst of signals from through pin 6 of the receiver 656a-d to the input pins 25-28 of node microprocessor 726. After receiving this information, the node microprocessor 726 determines if it is configured to one to four wheels and one or more axles.

The node microprocessor 726 functions to monitor the incoming signal from pin 6 of the receiver 656a into pins 25-28 of node microprocessor 726. In particular, the node microprocessor 726 monitors pin 6 of the receiver 656a to determine the length time pin 6 is held high. Should pin 6 be held high for a first predetermined amount of time, the receiver 656a is forwarding to the node a positive diagnostic signal. Should pin 6 be held high for a second predetermined amount of time, the receiver 656a is forwarding to the node 658 an alarm signal.

The node microprocessor 726 communicates through the bus and communication circuit 730 the results of the inputs from the receiver 656a to indicator 651, via bus 653.

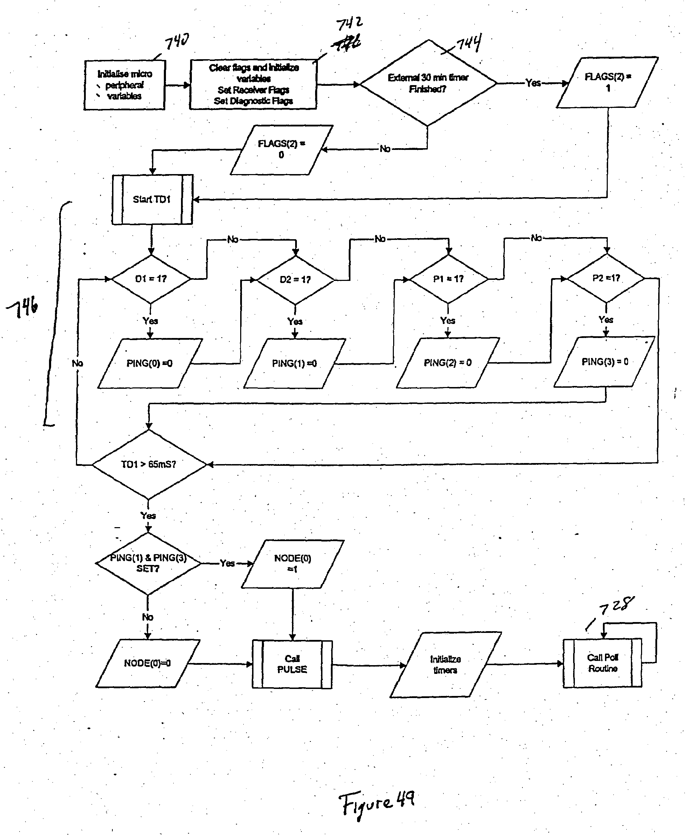

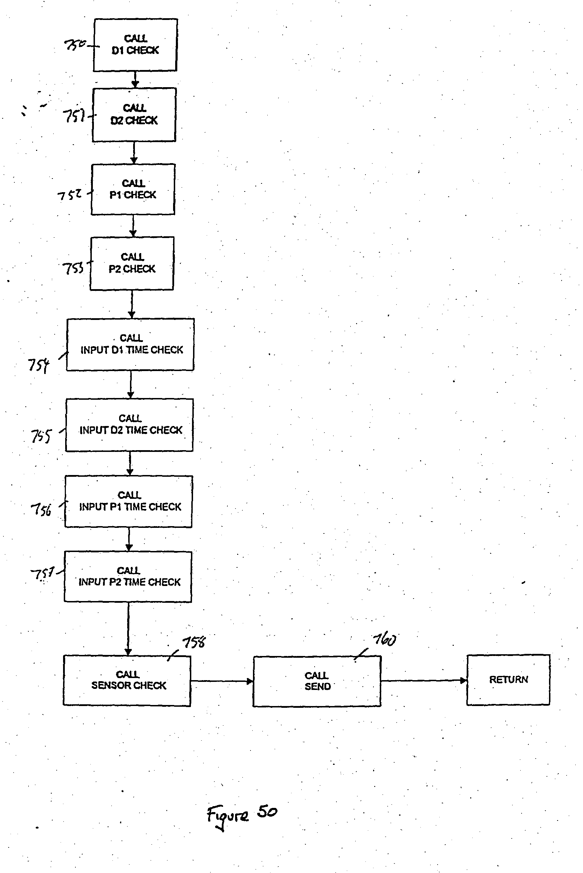

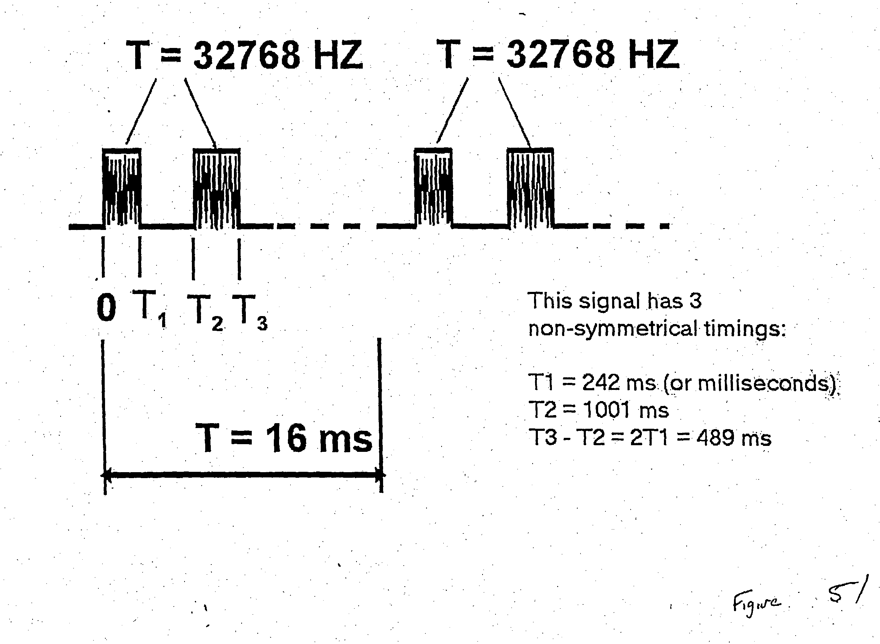

Figures 49 and 50 represent flow charts describing the function of the node microprocessor 726. The node microprocessor 726 is initialized 740 by resetting and clearing all flags in process block 742. The node microprocessor 726 in decision block 744 checks Pin 7 of the charge circuit 728 to determine if 30 minutes has elapsed between ignition on/off/on. If it has, the node allows the sensor diagnostic check to occur. This check occurs in block 758 of Figure 50. The node microprocessor 726 then monitors (746) pins 25-28 to see if the receivers 656a-d are producing incoming bursts to indicate they are present in the system. The node microprocessor 726 uses this information in process section 746 to configure itself as a two or four wheel sensor module. The node microprocessor 726 then calls the polling routine in process block 728 to watch for diagnostic or alarm signals.

As best seen in Figure 50, the polling routine begins with process blocks 750 through 753, which functions as a diagnostic check by determining if it has received the initiation burst from the receiver 656a-d. During power on, the nodes will pole the receiver inputs within the first second. If any of the receivers do not send the appropriate signal, a failure is displaied on those wheels. In process blocks 754 to 757, the node microprocessor 726 determines if an alarm signal has been generated by the receivers 656a-d. In process block 758, the node microprocessor 726 determines if the diagnostic signals have been received from all of the associated sensors. When the check is allowed, the node will poll the inputs for a sensor diagnostic signal (of however many wheels are configured), it times out for 1 minute, while waiting for the other signals. If the other signals do not appear within 1 minute, a failure is displayed for the wheels that did not send a sensor diagnostic signal. If they have not, an alarm is signaled identifying that the TPMS 650 needs service. In process block 760 a signal is provided to the indicator 600.

Figures 52a and 52b represent voltage versus time plots for several places within the TPMS 650 for diagnostic and alarm conditions respectively. Trace 762 represents the voltage at pin 6 of signal encoder 666. At startup 764, pin 6 of encoder 666 is held high by VCC. Upon rotation of the tire, rolling switch 678 of sensor 654 closes. At time 766, pin 6 of signal encoder 666 is brought low while capacitor C1 of the diagnostic circuit 662 charges for approximately 10 seconds. Trace 768 represents an output PIC of pin 3 having a 0.5 second delay to act as a debounce guard for the roll switch followed by the frequency of 32768 Hz. Trace 770 represents output PIC of pin 7 having a predetermined square wave signature. As can be seen at 772, bringing pin 6 low drives signal encoder 666 to output the modulated signal 774 which is a combination of the two signals 768 and 770.

The pulses 774 are received by LC resonant circuit 700 of the receiver 656. The signal conditioner 704 of receiver 656 conditions the signal 772 for acceptance by the receiver signal decoder 706. The signal decoder 706 receives the conditioned signal and determines through hardware or software logic that a signal of a predetermined signature has arrived. Upon recognition of the predetermined signature, pin 6 of the signal encoder 706 outputs signal 776.

Signal 776 is received by the node 658 which communicates through the bus 653 with indicator 651. As can be seen, when capacitor C1 of the sensor diagnostic circuit 662 charges, sensor signal encoder 666 stops outputting pulses. This provides the timing mechanism for the diagnostic signal.

Figure 52b represents voltage versus time plots for several places within the TPMS 650 for an alarm condition. Wave form 778 depicts the closing of low pressure switch 680 within the sensor 654. The closing of low pressure switch 680 brings pin 6 low for a prolonged amount of time. Additionally, the low pressure switch 680 has a debounce feature which reduces the number of inadvertent incorrect signal communications. Upon bringing pin 6 low, sensor signal encoder 666 begins outputting a series of pulses 780. These pulses are received by the receiver 656 as wave form 782 and conditioned by receiver 656. Upon sensing wave form 782 for a predetermined amount of time which is longer than the diagnostic signal, receiver 656 outputs alarm signal 784 to the node 658.

The node 658 monitors the length of the signals 776 and 784. Should the signal be of a short duration, such as 776, the node 658 registers the receipt of a diagnostic signal. Should the node 658 register the receipt of a long signal, such as 784, the node registers an alarm. Upon registering an alarm, the node 658 communicates with indicator 651 the system fault through system bus 653.

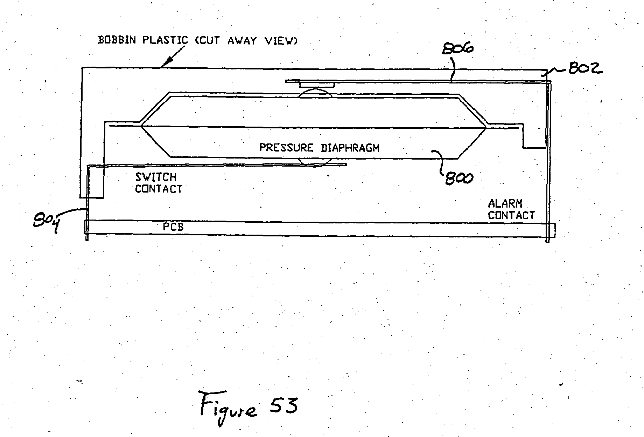

Figure 53 represents a side view of an active sensor 654 according to another embodiment of the invention. Shown is a pressure diaphragm 800 encased by a polymer inductor bobbin 802. Further integrated into the inductor bobbin 802 is switch contact 804 and alarm contact 806. The inductor bobbin 802 is used to hold inductors L1 and L2 of the active sensor 654.

The pressure diaphragm 800 is a hermetically sealed metal diaphragm, which is used on one of the active sensor's two electrical contacts. The pressure diaphragm 800 is constructed of stainless steel of varying gauges (0.125mm, 0.15mm, 0.20mm, 0.25mm). The gauge used in the pressure diaphragm 800 is dependent on the pressures the sensor switch is to be used for. The thicker the material, the higher pressure the pressure diaphragm 800 can withstand.

The dynamic properties of the pressure diaphragm 800 in the active sensor 654 are dictated by Young's Modulus of the material and by the spatial relationships of the pressure diaphragm 800 to the alarm contact 806. The terminal 806 and switch contact 804 are held rigidly in place by the bobbin plastic 802. The switch contact 804 is fabricated from nickel-plated spring steel and will flex to allow for different gauges of pressure diaphragm material to be used in the assembly, as the pressure application requires.

Before the pressure diaphragm 800 is installed, it is exposed to a specific air pressure that is greater than the application pressure in order to compress it to a predetermined state. The pressure applied is determined by the desired alarm point for the application and by the material thickness of the pressure diaphragm. The for any specific pressure diaphragm the greater the pressure it is pre-exposed to, the lower the tire pressure alarm point, thus the switch can be calibrated to activate at any desired pressure. When this initial pressure is removed the switch will retain the desired state thus setting up a specific distance between the pressure diaphragm 800 and the alarm contact 806 when the proper tire pressure is applied.

As tire pressure drops, the diaphragm will expand toward the alarm contact until they make contact at a specific pressure alarm point. This contact triggers the electronics in the sensor to send a low-pressure alarm. As the pressure further drops towards 0 PSI the diaphragm will continue to expand while in contact with the alarm terminal. To relive the contact force caused by the increasing interference of the diaphragm and the alarm contact, the switch contact will spring back and absorb this force, thus not causing any damage to the diaphragm, alarm terminal or plastic bobbin.

As pressure is again increased, the diaphragm will compress until the contact has been broken with the alarm terminal. This happens when the outer edges of the pressure diaphragm seat on the plastic bobbin. The pressure diaphragm is always forced toward the alarm contact by the switch contact spring (500g of force), and when contact with the alarm terminal is broken the switch contact will accurately seat the pressure diaphragm on the plastic bobbin. The total amount that the pressure switch is compressed to is less than 0.2mm, but because the pressure diaphragm is seated accurately and interference forces are absorbed by the switch contact, all spatial relationships remain precise and the alarm set point is accurate and controllable.

By integrating the alarm contact into the inductor bobbin 802, manufacturing tolerances can be improved over previous systems which place the alarm contact on an adjacent PC board.

In summary, the TPMS 650 utilizes the nodes 658a-c to form a highly configurable system. Inherent in each node 658a-c is an ability to be used to monitor pressure signals from one to four tires. Although it is preferable that a node 658a-c be limited to a single axle, each node 658a-c can monitor signals from multiple axles. Additionally, as the node 658a-c communicate via a common communications bus 653, they can be linked together, without being reconfigured, for use on vehicle having varying numbers of axles. For example, a pair of nodes can be used to monitor the pressure of the tires for a tractor trailer cab. When a multi-axle trailer is coupled to the cab, the system can reconfigure itself to monitor nodes and sensors positioned on the trailer by simply coupling the nodes together via the communication bus 653.

The foregoing discussion discloses and describes merely exemplary embodiments of the present invention.

One skilled in the art will readily recognize from such discussion, and from the accompanying drawings and claims, that various changes, modifications and variations can be made therein without departing from the spirit and scope of the invention.

**Claims**

1. A tire pressure monitoring system for monitoring a pressure of at least one tire on a vehicle, said tire pressure monitoring system comprising:

   an actively powered sensor mounted relative to the at least one tire of the vehicle, said actively powered sensor operable to sense tire pressure within the at least one tire;
   a receiver mounted relative to the vehicle at a location external of the tire and within proximity to said actively powered sensor, said receiver operable to generate a signal indicative of the tire pressure sensed by said actively powered sensor;
   at least one node operable to receive said signal from said receiver indicative of the pressure and operable to communicate with a tire pressure status indicator; and
   said tire pressure status indicator in communication with said node to provide a tire pressure status based upon said signal generated by said receiver.

2. The tire pressure monitoring system as defined in Claim 1 wherein said actively powered sensor includes a rolling switch, said rolling switch being operable to place the actively powered sensor in an active mode upon reaching a predetermined velocity.

3. The tire pressure monitoring system as defined in Claim 1 wherein said actively powered sensor transmits an alarm signal when the tire pressure falls outside a predetermined parameter.

4. The tire pressure monitoring system as defined in Claim 1 wherein said actively powered sensor is configured to provide both a diagnostic signal and alarm signal.

5. The tire pressure monitoring system as defined in Claim 1 wherein said receiver is operable to receive a signal from said sensor having a signature indicative of a status of said sensor.

6. The tire pressure monitoring system as defined in Claim 1 wherein said receiver includes a logic circuit operable to discriminate between a valid diagnostic signal and an alarm signal.

7. The tire pressure monitoring system as defined in Claim 6 wherein said logic circuit discriminates between a valid diagnostic signal and an alarm signal by way of a programmable controller.

8. The tire pressure monitoring system as defined in Claim 1 further comprising a plurality of actively powered sensors operable to sense tire pressure within a plurality of tires.

9. The tire pressure monitoring system as defined in Claim 1 further comprising a plurality of nodes operable to communicate with said tire pressure status indicator coupled via a common communications bus.

10. The tire pressure monitoring system as defined in Claim 1 wherein said sensor is positioned relative to said receiver within a range of between about 50 centimeters to about 100 centimeters.

11. A tire monitoring system for monitoring a physical parameter of at least one tire on a vehicle, said tire monitoring system comprising:

    a sensor mounted relative to the at least one tire of the vehicle, said sensor operable to sense the physical parameter within the at least one tire;
    a receiver mounted relative to the vehicle and at a location external of the tire and within proximity to said sensor, said receiver operable to generate a first signal indicative of the physical parameter sensed by said sensor;
    a coupling node in communication with said receiver, said coupling node operable to send a second signal to a communications bus upon receipt of the first signal generated by said receiver; and

a tire status indicator in communication with said node, said tire status indicator being coupled to the communications bus and operable to receive the second signal.

12. The tire monitoring system as defined in Claim 11 further comprising a plurality of receivers and sensors, and wherein said coupling node is operable to receive signals indicative of the physical parameter sensed by said plurality of sensors.

13. The tire monitoring system as defined in Claim 11 wherein said sensor is operable to measure at least one of a tire pressure and a temperature.

14. The tire monitoring system as defined in Claim 11 further comprising a plurality of coupling nodes wherein each of said coupling nodes include a communications circuit configured to communicate between said coupling nodes, and wherein each node is operable to receive a signal from at least one receiver.

15. The tire monitoring system as defined in Claim 11 wherein said sensor is an actively powered sensor having an inductor (L) and capacitor (C) resonant tank.

16. The tire monitoring system as defined in Claim 15 wherein said sensor further includes a pressure transducer switch operable to actuate upon the tire pressure dropping below a predetermined pressure and a motion switch operable to actuate upon the vehicle exceeding a predetermined speed.

17. The tire monitoring system as defined in Claim 11 wherein said node is operable to identify whether said first signal represents one of an initialization signal, a diagnostic signal, and an alarm signal.

18. The tire monitoring system as defined in Claim 11 wherein said sensor includes a diagnostic circuit, said diagnostic circuit operable to cause said sensor to produce a diagnostic signal.

19. The tire monitoring system as defined in Claim 11 wherein said node is operable to determine the number of receivers in communications.

20. A parameter monitoring system for monitoring a first parameter, said monitoring system comprising:

a first sensor positioned at a first location, said first sensor operable to transmit a first signal having a predetermined signature indicative of the first parameter;
a first receiver positioned at a second location remote from said first location and within proximity to said first sensor, said first receiver operable to generate a second signal indicative of the first parameter;
an indicator in communication with said node operable to receive said second signal to provide the first parameter to a user.

21. The monitoring system as defined in Claim 20 wherein said first sensor is located within a vehicle tire and said first parameter is at least one of a predetermined tire pressure and a tire temperature.

22. The monitoring system as defined in Claim 20 wherein said first receiver includes a processor which is in sleep mode when said first sensor is not transmitting said first signal and in an awake mode when said first sensor is transmitting said first signal.

23. The monitoring system as defined in Claim 22 wherein said processor further includes a node operable to receive said second signal indicative of the first parameter.

24. The monitoring system as defined in Claim 23 wherein said node transmits said third signal to said indicator by way of a communications bus.

25. The monitoring system as defined in Claim 20 comprising a second sensor positioned at a third location, said second sensor operable to transmit a fourth signal indicative of a second parameter, a second receiver positioned at a fourth location remote from said third location and within proximity to said second sensor, said second receiver operable to generate a sixth signal indicative of the second parameter, the node in communication with said second receiver, said node operable to generate a seventh signal upon receipt of the sixth signal from the second receiver indicative of the second parameter, and wherein said node is in communication with said indicator.

26. The monitoring system as defined in Claim 20 wherein said node is operable to receive signals generated from a plurality of sensors.

27. A tire monitoring system for monitoring a pressure of at least one tire on a vehicle, said tire pressure monitoring system comprising:

an indicator;
an actively powered sensor operable to measure pressure within the tire and operable to transmit a signal having a first predetermined signature indicative of the pressure;
a receiver mounted external to the tire, said receiver operable to identify said first predetermined signature and transmit a first signal indicating it has identified the predetermined signature; and
a coupling node operable to receive said first signal and communicate with said indicator.

28. The tire monitoring system of Claim 27 wherein said receiver identifies said predetermined signature using logic software.

29. The tire monitoring system of Claim 27 wherein said receiver identifies said predetermined signature using a logic circuit.

30. The tire monitoring system of Claim 27 wherein said actively powered sensor comprises a rolling switch, said rolling switch being operable to place the actively powered sensor in an active mode upon reaching a predetermined velocity.

31. The tire monitoring system of Claim 27 wherein said sensor is operable to transmit a signal having a second predetermining signature indicative of a properly functioning sensor.

32. The tire monitoring system of Claim 31 wherein said sensor comprises a timing circuit which is operable to regulate a length of time the signal having the second predetermining signature is transmitted.

33. A tire monitoring system for monitoring the status of at least one tire on a vehicle comprising:

a sensor disposed within the tire and operable to transmit a first signal indicative of a physical property of the tire;
a receiver operable to receive said first signal and transmit a second signal;
a node operable to receive the second signal from said receiver and identify if said second signal represents at least one of an initialization signal, an alarm signal, or a diagnostic signal.

34. The tire monitoring system according to Claim 33 wherein the receiver is operable to transmit at least one of an initialization signal, an alarm signal, or a diagnostic signal.

35. The tire monitoring system according to Claim 34 further comprising a second sensor disposed within a second tire and operable to transit a third signal indicative of a physical property of the second tire, and a second receiver operable to receive the third signal and transmit a fourth signal, wherein said node is further operable to receive said fourth signal.

36. A tire monitoring system for monitoring a tire parameter of at least one tire on a vehicle, said tire pressure monitoring system comprising:

an actively powered sensor mounted relative to the at least one tire of the vehicle, said actively powered sensor operable to sense the tire parameter within the at least one tire, said actively powered sensor includes a rolling switch which places the actively powered sensor into an active mode upon the vehicle exceeding a predetermined speed;
a receiver mounted relative to the vehicle at a location external of the tire and within proximity to said actively powered sensor, said receiver operable to generate a signal indicative of the tire parameter sensed by said actively powered sensor; and
a tire parameter status indicator in communication with said receiver to provide a tire pressure status based upon the signal generated by said receiver.

37. The tire monitoring system as defined in Claim 36 wherein said actively powered sensor transmits an alarm signal when the tire parameter falls below a predetermined threshold.

38. The tire monitoring system as defined in Claim 36 wherein said actively powered sensor provides both a diagnostic signal and an alarm signal.

39. The tire monitoring system as defined in Claim 36 wherein if the rolling switch opens for a predetermined amount of time, the sensor will stop transmitting the first signal, and further wherein will continue again when the vehicle moves.

40. A pressure sensor comprising:

    a frame;
    a pressure diaphragm being floatably held within said frame; and
    a pair of contacts disposed relative to said pressure diaphragm wherein said diaphragm expands to engage said pair of contacts.

41. The pressure sensor according to Claim 40 wherein at least one contact is operable to support said pressure diaphragm within said frame.

42. The pressure sensor according to Claim 41 wherein at least one of said contacts is operable to bias said pressure diaphragm into a first position.

43. The pressure sensor according to Claim 40 wherein said diaphragm is operable to expand to at least one contact at a predetermined pressure.

44. The pressure sensor according to Claim 43 wherein at least one contact is operable to absorb forces from said diaphragm when the pressure is lower than a predetermined point.

45. The pressure sensor according to Claim 40 wherein said frame supports an inductor.

FIG. 1.

FIG. 2.

FIG. 3A.

FIG. 3B.

FIG. 4.

FIG. 5.

FIG. 6.

FIG. 7.

FIG. 8.

EP 1 327 535 A2

FIG.10.

FIG. 9A.

FIG. 9B.

FIG. 11A.

FIG. 11B.

FIG. 12B.

FIG.12A.

FIG.13.

FIG. 14.

FIG. 15.

FIG. 17.

FIG. 16

FIG. 18.

FIG. 19.

FIG. 20.

FIG. 21.

EP 1 327 535 A2

FIG. 22.

FIG. 23.

FIG. 24.

FIG. 25A.

FIG. 25B.

FIG. 26.

FIG. 27A.

FIG. 27B.

Fig. 28A.

Fig. 28B.

FIG. 20

FIG. 30.

*Figure - 31a*

_Figure - 31b_

*Figure - 32a*

*Figure - 32b*

*Figure - 33a*

*Figure - 33b*

*Figure - 34a*

*Figure - 34b*

Figure - 35

_Figure - 36a_

Figure - 36b

_562_

_564_

_566_

_Figure - 37a_

_562_

_566_

_564_

_Figure - 37b_

Figure - 38

Figure - 39a

Figure - 39b

Figure - 39c

EP 1 327 535 A2

Figure - 39d

576

582

U6E
4069
10
11

U6F
4069
12
13

U7D
4001
11
12
13

U3B
4072
12
11
10
9
13

R30
510K

R31
7.5M

+C9
47uF

GND

D1    LED1
D2    LED2
P1    LED3
P2    LED4

Figure - 40

Figure - 41

Figure - 42a

Figure - 42b

EP 1 327 535 A2

Figure 43

Figure 44

Figure 45

# FLOWCHART FOR THE SENSOR PROGRAM

INIITIALIZE VARIABLE — 681

MICRO GOES TO SLEEP — 687

NO

PIN 6 LOW? — 682

YES

OUTPUT TO PIN 7 ENCODED SIGNAL — 683

NO

PIN 6 LOW — 685

YES

CONFIDENTIAL

Figure 46

FLOWCHART FOR THE RECEIVER PROGRAM

Figure 47

Figure 4B

658a

66

EP 1 327 535 A2

Figure 49

750 — CALL
D1 CHECK

751 — CALL
D2 CHECK

752 — CALL
P1 CHECK

753 — CALL
P2 CHECK

754 — CALL
INPUT D1 TIME CHECK

755 — CALL
INPUT D2 TIME CHECK

756 — CALL
INPUT P1 TIME CHECK

757 — CALL
INPUT P2 TIME CHECK

758 — CALL
SENSOR CHECK

760 — CALL
SEND

RETURN

Figure 50

T = 32768 HZ        T = 32768 HZ

0 $T_1$  $T_2$ $T_3$

This signal has 3
non-symmetrical timings:

T1 = 242 ms (or milliseconds)
T2 = 1001 ms
T3 - T2 = 2T1 = 489 ms

T = 16 ms

Figure 51

EP 1 327 535 A2

diagnostic signals

input pic (pin6)
764  766  762
Tchag ≈ 10sec
662
t

output pic (pin3)
748
f = 32768 HZ
t

0,5 sec    2 sec

output pic (pin2)
770
patterns
0 t₁  t₂  t₃    0 t₁  t₂  t₃
t

2 sec

output sensor
772
modulated output signal
f = 32768 HZ
0 t₁  t₂  t₃    0 t₁  t₂  t₃
t

Reciever output Ampl. (pin 7)
the same shape of modulated signal *
t₁  t₂  t₃    0 t₁  t₂  t₃

Reciever input pic (pin 7)
774
0 t₁  t₁'  t₂    0 t₁'  t₂'  t₃'
* * * *

Reciever output (pin 2 pic) ***
776
T = 4÷6 sec
t

Node (indicator) output

Figure 52A

BOBBIN PLASTIC (CUT AWAY VIEW)

806

~802

PRESSURE DIAPHRAGM

800

SWITCH
CONTACT

ALARM
CONTACT

804

PCB

Figure 53